(19) Europäisches Patentamt
European Patent Office
Office européen des brevets

(11) **EP 2 907 882 A1**

(12) **EUROPÄISCHE PATENTANMELDUNG**

(43) Veröffentlichungstag:
**19.08.2015 Patentblatt 2015/34**

(51) Int Cl.:
*C22B 7/00* ^(2006.01)      *C22B 59/00* ^(2006.01)

(21) Anmeldenummer: **15155297.3**

(22) Anmeldetag: **16.02.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **14.02.2014 EP 14155119**
**22.05.2014 EP 14169545**

(71) Anmelder:
• **Naumann, Rolf**
  **35285 Gemünden (DE)**

• **Nocker, Karlheinz**
  **35447 Reiskirchen (DE)**

(72) Erfinder:
• **Naumann, Rolf**
  **35285 Gemünden (DE)**
• **Nocker, Karlheinz**
  **35447 Reiskirchen (DE)**

(74) Vertreter: **Cremer, Karsten**
  **Pharma Concepts GmbH**
  **Almstadtstr. 7**
  **10119 Berlin (DE)**

(54) **Rückgewinnung von Selten-Erd-Metallen**

(57)    Verfahren zur Rückgewinnung wenigstens eines SE-Metalls aus einem das wenigstens eine SE-Metall aufweisenden Substrat, wobei das Verfahren bevorzugterweise wenigstens die folgenden Schritte umfasst:
(a) Bereitstellen des Substrats in einer beheizbaren Ladezone L1 bei einer Temperatur $T_1$ und einem Druck $P_1$,
(b) Bereitstellen wenigstens einer Abscheidungsvorrichtung in einer beheizbaren Abscheidezone L2 bei einer Temperatur $T_2$ und einem Druck $P_2$,
(c) Chemisches Transportieren des SE-Metalls und/oder einer das SE-Metall enthaltenden Verbindung, in einem Temperatur- und/oder Druckgradienten von der Ladezone L1 zur Abscheidezone L2, wobei $T_2 > T_1$ ist.

Fig. 1C

**Beschreibung**

Die vorliegende Erfindung betrifft eine Apparatur, insbesondere einen Mehrzonenofen und ein Verfahren zur Rückgewinnung wenigstens eines SE-Metalls, insbesondere des SE-Metalls als solchem und/oder einer SE-haltigen intermetallischen Phase und/oder Borid und/oder Nitrid, aus einem das wenigstens ein SE-Metall aufweisenden Substrat, insbesondere einem das wenigstens ein SE-Metall in Form des SE-Metalls als solchem und/oder einer SE-haltigen intermetallischen Phase und/oder Borid und/oder Nitrid, aufweisenden Substrat.

In vielen Bereichen der Hochtechnologie werden Metalle der Seltenen Erden und ihre chemischen Verbindungen mit Erfolg eingesetzt. Hierdurch steigt der Bedarf an diesen Stoffen überproportional stark. Dabei sind Metalle der Seltenen Erden, hierin auch als SE-Metalle bezeichnet, begehrte Rohstoffe, die unter anderem für Elektronikgeräte, beispielsweise Mobiltelefone, Elektroautos, Windkraftanlagen, Computerfestplatten, Permanentmagneten und Energiesparlampen wichtig sind. SE-Metalle und ihre chemischen Verbindungen finden dabei insbesondere in der Produktion von Katalysatoren oder der Herstellung starker Magneten mit geringem Volumen Verwendung. Solche starken Magneten werden bspw. auf der Basis einer intermetallischen Verbindungen $SmCo_5$ bzw. $Sm_2Co_{17}$ oder $Nd_2Fe_{14}B$ hergestellt, welche sich durch besonders hohe magnetische Güteziffern auszeichnen. Das besondere Merkmal dieser Werkstoffgruppe stellen ihre hohen Koerzitivfeldstärken bei gleichzeitig relativ hoher Remanenz dar. Weiterhin wird beispielsweise Lanthan in Metall-Legierungen für Batterien oder Akkus, Dysprosium, Terbium und Neodym für Kleinstmagnete mit hohen magnetischen Kennziffern eingesetzt. Cer wird für hochwertige Poliermittel und als Zusatz in Spezialgläsern eingesetzt, sowie in Leuchtmitteln für Plasma- oder LCD-Bildschirme, sowie für Zusätze in Energiesparlampen oder in Radargeräten. Bislang konnten SE-Metalle anders als andere Rohstoffe nur unter großem Aufwand aus Schrott, insbesondere aus Elektronikschrott, zurückgewonnen werden. Es sind hierzu mehrere relativ aufwendige Verfahren bekannt SE-Metalle aus Schrott und insbesondere gemischten Metallschrott, rückzugewinnen, wobei die Verfahren noch kaum kommerziell entwickelt sind und unter erheblichen Nachteilen leiden.

In nasschemischen Verfahren werden beispielsweise die SE-Metalle als SE-Metall-Verbindungen gefällt. Es ist mit herkömmlichen chemischen Methoden zwar möglich, die im Schrott vorhandenen SE-Metalle und SE-Metall-Verbindungen auf nasschemischen Weg aufzulösen und in einem aufwendigen Trennprozess einzeln abzuscheiden, dabei fallen jedoch die SE-Metalle in Form ihrer Verbindungen als Chloride, Hydroxide oder Oxide oder andere Salze wie bspw. Jodide an. Nachteilig bei dieser Methode ist die Notwendigkeit, nach der Fällung einen weiteren, energieintensiven Reduktionsschritt zur Gewinnung der reinen Metalle durchführen zu müssen, bzw. wie im Falle der Jodide, die üblicherweise thermisch zersetzt werden müssen. Nur die Edelmetalle lassen sich sehr leicht durch Reduktion direkt gewinnen. Für die galvanische Methode ist es ebenso zwingend erforderlich, dass der Elektronikschrott zunächst in umweltschädlichen Säuren gelöst werden muss.

Weiterhin bekannt ist ein Verfahren mittels flüssig-flüssig-Extraktion, bei der SE-Metall-haltiger Metallschrott verflüssigt und mit flüssigem Magnesium überschichtet wird. Die gewünschten Elemente lösen sich dann im Magnesium.

Bekannt sind auch Trennverfahren nach dem Prinzip der Gasphasenreaktionen, die üblicherweise in einem Zwei-Zonen-Ofen durchgeführt werden. Ein solcher Zwei-Zonen-Ofen umfasst eine als Quelle bezeichnete erste Zone, in der sich ein Ausgangsbodenkörper bzw. Substrat, umfassend die interessierende(n) Verbindung(en), in einer Vertiefung befindet. Ein Transportmittel, welches über den Ausgangsbodenkörper bzw. Substrat hinwegströmt, dient dazu, den Ausgangsbodenkörper auf der Quellenseite bei einer bestimmten Temperatur in der Gasphase zu lösen und im strömenden offenen System zur Senkenseite des Ofens zu transportieren. Die Quellen- und Senkentemperaturen werden üblicherweise mit $T_1$ bzw. mit $T_2$ bezeichnet, wobei $T_1$ immer die niedrigere der beiden Temperaturen ist. Beispielsweise wurde bislang üblicherweise Neodymchlorid mit dem Transportmittel $AlCl_3$ im Temperaturgefälle von etwa 500°C nach etwa 400°C (Gunsilius H., Urland W., Kremer R. Z. Anorg., Allg. Chem. 550, 1987, p. 35) bzw. von etwa 400°C nach etwa 180°C (Yin L., Linshan W., Yuhong W.; Rare Met. 19; p. 157; 2000) transportiert. Auch gemischte Halogenide des Neodyms wie $NdBr_{3-x,s}Cl_x$ (Schulze M., Urland W.; Eur. J. Solid State Inorg. Chem. 28; p- 571; 1991) wurden bereits beschrieben. Weiterhin sind bereits die thermodynamischen Daten von $NdAl_3Cl_{12},g$ bestimmt worden (H. Oppermann, M. Zhang, C. Hennig Z. Naturforsch. 53 b 1343-1351 (1998)).

Das Dokument CN102952948A beschreibt ein Trenn- und Aufreinigungs-Verfahren für SE-Metalle mittels chemischem Gasphasen-Transport in einem Zwei-Zonen-Ofen, bei dem die Temperatur $T_2$ in der Quellenzone höher gewählt ist als die Temperatur $T_1$ in der Senken-Zone. Dabei wird das SE-Metall als Chlorid durch Abscheidung an einem Graphitring erhalten. Ein Nachteil des beschriebenen Verfahrens des Standes der Technik besteht jedoch insbesondere darin, dass über diesen Weg des Transports von heiß nach kalt, von $T_2$ -> $T_1$, stets die thermodynamisch stabilste Verbindung nämlich die SE-Metall-Chloride erhalten werden. Die erhaltenen SE-Metall-Chloride müssen demnach wiederum aufwendig zu SE-Metallen reduziert werden, um die elementaren SE-Metalle zu erhalten. Bei der Rückgewinnung von SE-Metallen aus Elektronikschrott werden im beschriebenen Verfahren des Standes der Technik im Schrott befindliche Verunreinigungen ebenfalls in der Gasphase gelöst werden und sich in der kälteren Senken-Zone abscheiden. Dabei entsteht das Problem, dass solche unerwünschten Verunreinigungen wie bspw. Nickelchlorid oder Eisenchlorid, aufwendig von den SE-Metallhalogeniden getrennt werden müssen. Die Bildung von Gaskomplexen für den Transport von SE-Chloriden im Chlorstrom unter Hinzufügen von Aluminiumchlorid nach der folgenden Reaktionsgleichung ist bereits bekannt (Murase, Kuniacki et al.; Journal of Alloy and Compounds 217; 1995; p. 218-225): $NdCl_{3,s} + (n/2) Al_2Cl_{6,g} = NdAl_nCl_{3+3n,g}$.

Gemäß des von Murase et al. eingesetzten Verfahrens werden in der kälteren Zone in mehreren Fraktionen SE-Chloride abgeschieden. Eingesetzt wurde ein Magnetschlamm. Murase bezeichnet den chemischen Transport daher als geeignete Methode zur Rückgewinnung von SE-Chloriden. Es besteht jedoch wiederum der Nachteil, dass die Abscheidung von Chloriden erfolgt, was wiederum die Reduktion zu den Elementen erforderlich macht.

Dokument CN 101 550 494 A offenbart ein Verfahren zur Herstellung von Selten-Erd-Metallen aus Oxiden und Carbonaten der SE-Metalle, wobei das Oxid mit 40 % HI gelöst, anschließend filtriert und das $H_2O$ unter $I_2$ bei 400°C entzogen wird. Im Anschluss wird das wasserfreie Trijodid über eine Sublimation zersetzt. Mit anderen Worten, offenbart das Dokument eine thermische Dissoziation von $NdI_{3,g}$ nach erfolgter Sublimation von $NdI_{3,g}$ zur heißeren Stelle. Es handelt sich demnach um zwei Reaktionen, nämlich der Sublimationsreaktion von $NdI_{3,s}$ -> $NdI_{3,g}$ und der thermischen Zersetzung von $NdI_{3,g}$ <> $Nd,s + 3/2 I_{2,g}$. Dabei wird anerkannt werden, dass ein derartiges Verfahren, insbesondere die beschriebene Sublimation somit keine Reaktion des vorgelegten Substrates mit dem Transportmittel und insbesondere keinen chemischen Transport darstellt. Somit ist auch das offenbarte Verfahren auf die Sublimation und thermische Zersetzung von $NdI_3$ beschränkt und es können nicht die Vorteile verschiedene Transportmittel einsetzen oder kombinieren zu können genutzt werden. Dabei dient das offenbarte Verfahren der Gewinnung von Nd aus Erzen bestehend aus Oxiden und Carbonaten, ist jedoch für das Rückgewinnen und Recycling von SE-Metallen als solchen und/oder intermetallischen Phasen und/oder Borid und/oder Nitrid, aus metallischen SE-Abfällen ungeeignet. Insbesondere können mit dem offenbarten Verfahren intermetallische Phasen bestehend aus SE-Metallen und anderen Metallen, wie Eisen; sowie Boride, bspw. aus dem Phasendreieck Nd-Fe-B, beispielsweise $Nd_2Fe_{14}B$, durch eine derartige thermische Dissoziation nicht hergestellt werden. Vielmehr ist durch eine derartige thermische Dissoziation von Nd-Jodiden und durch die Wahl des Substrates auf das Gewinnen von SE-Metall beschränkt.

Es ist die Aufgabe der vorliegenden Erfindung, die vorgenannten Nachteile zu überwinden. Es ist eine weitere Aufgabe der vorliegenden Erfindung ein Verfahren und/oder eine Apparatur bereitzustellen, welches/welche erlaubt SE-Metalle aus verschiedenen Ausgangsstoffen, bspw. aus verschiedenen Abfallarten, insbesondere aus Elektronikschrott, in einfacherer und/oder energiesparenderer Weise rückzugewinnen. Es ist eine noch weitere Aufgabe der vorliegenden Erfindung ein Verfahren und/oder eine Apparatur bereitzustellen, welches/welche erlaubt SE-Metalle aus verschiedenen Ausgangsstoffen, bspw. aus verschiedenen Abfallarten, insbesondere aus Elektronikschrott, derart zurückzugewinnen, insbesondere weitestgehend verunreinigungsfrei zurückzugewinnen, dass diese ohne größeren Aufwand und/oder Nachbearbeitung wiederverwendet werden können.

Diese und weitere Aufgaben der Erfindung werden in einem ersten Aspekt gelöst durch ein Verfahren nach Anspruch 1 zur Rückgewinnung eines SE-Metalls, insbesondere in Form des SE-Metalls als solchem oder einer SE-haltigen intermetallischen Phase, aus einem das wenigstens eine SE-Metall aufweisende Substrat, insbesondere aus einem das SE-Metall als solchem oder als SE-haltige intermetallische Phase und/oder Borid und/oder Nitrid aufweisenden Substrats, und werden in einem zweiten Aspekt gelöst durch eine Apparatur, insbesondere einen Mehrzonenofen, nach Anspruch 5, zur Rückgewinnung eines SE-Metalls aus einem das wenigstens eine SE-Metall aufweisende Substrat. Bevorzugte Ausführungsformen ergeben sich aus den Unteransprüchen.

Ein Verfahren nach Anspruch 1, zur Rückgewinnung wenigstens eines SE-Metalls aus einem das wenigstens eine SE-Metall aufweisende Substrat, umfasst wenigstens die folgenden Schritte: (a) Bereitstellen des Substrats in einer beheizbaren Ladezone L1 bei einer Temperatur $T_1$ und einem Druck $P_1$, (b) Bereitstellen wenigstens einer Abscheidungsvorrichtung in einer beheizbaren Abscheidezone L2 bei einer Temperatur $T_2$ und einem Druck $P_2$, (c) Chemisches Transportieren des SE-Metalls und/oder einer das SE-Metall enthaltenden Verbindung, in einem Temperatur- und/oder Druckgradienten von der Ladezone L1 zur Abscheidezone L2, insbesondere nach Reaktion des SE- haltigen Substrates mit einem Transportmittel, um das Substrat in der Gasphase zu lösen. Ein solches erfindungsgemäßes Verfahren nach dem ersten Aspekt ist dadurch gekennzeichnet, dass $T_2$ größer $T_1$ ist.

Es soll verstanden werden, dass die im Zusammenhang mit dem erfindungsgemäßen Verfahren beschriebenen Schritte bevorzugterweise in der angegebenen Reihenfolge durchgeführt werden.

Die beschriebenen Probleme werden ebenfalls vorteilhaft gelöst durch eine Apparatur zur Rückgewinnung wenigstens eines SE-Metalls, insbesondere des SE-Metalls als solchem oder einer SE-haltigen intermetallischen Phase, aus einem das wenigstens ein SE-Metall aufweisenden Substrat, insbesondere einem das wenigstens ein SE-Metall in Form des SE-Metalls als solchem und/oder einer SE-haltigen intermetallischen Phase und/oder Borid und/oder Nitrid aufweisenden Substrat nach Anspruch 5. Eine solche Apparatur zur Rückgewinnung wenigstens eines SE-Metalls, insbesondere des SE-Metalls als solchem und/oder einer SE-haltigen intermetallischen Phase und/oder Borid und/oder Nitrid, aus einem das wenigstens ein SE-Metall aufweisenden Substrat, insbesondere einem das wenigstens ein SE-Metall in Form des SE-Metalls als solchem und/oder einer SE-haltigen intermetallischen Phase und/oder Borid und/oder Nitrid aufweisenden Substrat, weist einen hermetisch verschließbaren Reaktor auf und umfasst: (a) eine auf eine Temperatur $T_1$ und einem Druck $P_1$ beheizbare Ladezone L1 zur Aufnahme des SE-metallhaltigen Substrats; (b) einen ersten Kanal zur Ermöglichung eines Gasflusses des Transportmittels von der Ladezone L1 zur Abscheidezone L2; (c) eine beheizbare Abscheidezone L2 mit wenigstens einer beheizbaren Abscheidungsvorrichtung zum Abscheiden des wenigstens einen Selten-Erd-Metalles, insbesondere des SE-Metalls als solchem und/oder einer SE-haltigen intermetallischen Phase und/oder Borid und/oder Nitrid, bei einer Abscheidungstemperatur $T_2$ und einem Druck $P_2$, wobei die beheizbare Abscheidungsvorrichtung aus einem metallischen Material beschichtet und/oder aus einem metallischen Material gebildet ist, das einen Schmelzpunkt von mindestens 2000 °C aufweist und wobei $T_2$ größer $T_1$ ist.

Es soll verstanden werden, dass die vorliegende Erfindung gleichsam ein Verfahren nach der vorliegenden Erfindung wie eine Apparatur nach der vorliegenden Erfindung betrifft. Ein Merkmal, das hierin im Zusammenhang mit einer bevorzugten Ausführungsform einer Apparatur nach der vorliegenden Erfindung beschrieben wird, soll auch als ein mögliches Merkmal eines Verfahrens nach der vorliegenden Erfindung verstanden werden. Ebenso soll ein Merkmal, das hierin im Zusammenhang mit einer bevorzugten Ausführungsform eines Verfahrens nach der vorliegenden Erfindung beschrieben wird, auch als ein mögliches Merkmal einer Apparatur nach der vorliegenden Erfindung verstanden werden.

Der Erfindung liegt dabei die überraschende Erkenntnis zugrunde, dass die Rückgewinnung von SE-Metallen als SE-Metalle als solche, bzw. in Form ihrer intermetallischen Phasen, sowie der Boride und Nitride der SE-Metalle mittels chemischen Transports besonders erfolgen kann.

Der Begriff "Reaktor" wie hierin verwendet bezeichnet bevorzugt einen Ofen, insbesondere einen Mehrzonenofen, bevorzugtererweise einen Zwei-Zonen-Ofen.

Die Begriff "Chemische Transportreaktion", "chemischer Transport" oder "chemisches Transportieren" wie hierin verwendet, soll, bevorzugterweise, eine Vielzahl von Reaktionen bezeichnen, die ein gemeinsames Merkmal aufweisen, nämlich, dass ein im Ausgangsmaterial, bzw. Ausgangsbodenkörper bzw. Substrat enthaltenes SE-Metall als solches, dessen intermetallische Phase, und/oder das SE-Metall als Borid oder Nitrid in Gegenwart eines gasförmigen Reaktionspartners, des Transportmittels oder unter Zusatz eines Aluminiumhalogenids, als Gasteilchen oder Gaskomplex bei einer ersten Temperatur, bevorzugterweise einer Temperatur $T_1$, verflüchtigt wird und sich an einer Abscheidungsvorrichtung bei einer zweiten Temperatur, bevorzugterweise einer höheren Temperatur $T_2$, in einer Abscheidezone L2, bspw. in flüssiger Form oder in Form gut ausgebildeter Kristalle wieder abscheidet.

Dabei wird ein Fachmann unmittelbar erkennen, dass das erfindungsgemäße Verfahren bzw. die erfindungsgemäße Apparatur erlaubt, eine Ladezone L1 bei der Temperatur $T_1$ und dem Druck $P_1$ bereitzustellen, die der Reaktion des Ausgangsbodenkörpers bzw. Substrats mit dem Transportmittel in der beheizbaren Ladezone L1 dient, wobei das reine SE-Metall als solches oder als intermetallische Phase oder Borid oder Nitrid in der Gasphase gelöst wird. Die Abscheidezone L2 dient dabei dazu, dass das wenigstens eine Selten-Erd-Metall an der wenigstens einen beheizbaren Abscheidungsvorrichtung zum Abscheiden des wenigstens einen Selten-Erd-Metalls bei einer Abscheidungstemperatur $T_2$ und einem Druck $P_2$ in umgekehrter Reaktion aus der Gasphase entweder als reines SE-Metall als solches, oder entsprechend den Reaktionsbedingungen als intermetallische Phase oder Borid oder Nitrid abgeschieden wird.

Das erfindungsgemäße Verfahren erlaubt dabei vorteilhaft, dass das SE-Metall als solches oder als intermetallische Phase oder Borid oder Nitrid in der Abscheidezone abgeschieden wird und somit unmittelbar und ohne weiteren Aufbearbeitungsschritt, bspw. ohne die Reduktion zu den elementaren SE-Metallen, verwendet bzw. wiederverwendet werden kann.

Hierbei soll verstanden werden, dass die im Stand der Technik bekannten Verfahren keinen derartigen chemischen Transport im eigentlichen Sinn darstellen, da insbesondere das Transportmittel bei diesen Verfahren des Standes der Technik verbraucht und teilweise chemisch an das SE-Metall gebunden wird.

In einer bevorzugten Ausführungsform des Verfahrens nach der vorliegenden Erfindung wird das Transportmittel im Wesentlichen nicht verbraucht, bevorzugterweise ist das Verfahren ein im Wesentlichen transportmittelverlustfreies Verfahren.

In diesem Zusammenhang soll verstanden werden, dass im Verfahren nach der vorliegenden Erfindung bevorzugterweise keine stöchiometrischen Mengen an Transportmittel notwendig sind. Durch einen im Wesentlichen transportmittelverlustfreien Verfahrensverlauf wird das an der Abscheidungsvorrichtung zurückgewonnene Transportmittel an das Substrat, bzw. den Ausgangsbodenkörper zurückgeführt, was vorteilhaft zu einer besonders hohen Ausbeute an dem wenigstens einen SE-Metall führt, da die dem erfindungsgemäßen Verfahren zu Grunde liegende Reaktion im Wesentlichen ablaufen kann, bis das SE-Metall im Wesentlichen vollständig aus dem Substrat bzw. Ausgangsbodenkörper gelöst wurde.

Bevorzugterweise wird mit dem erfindungsgemäßen Verfahren eine Ausbeute an dem interessierenden wenigstens einen SE-Metall von wenigstens etwa 80% bis wenigstens etwa 90%, bevorzugterweise wenigstens etwa 95%, bevorzugterweise wenigstens etwa 99%, bevorzugtererweise wenigstens etwa 99,9% bezogen auf das in dem Ausgangsbodenkörper bzw. Substrat enthaltene SE-Metalls erzielt.

Dabei basiert ein "chemischer Transport" wie hierin verwendet, bevorzugterweise auf einem Diffusionsgefälle des Gasteilchens oder Gaskomplexes in einem Partialdruckgefälle. Ein "chemischer Transport" wie hierin verwendet, findet dabei bevorzugterweise, nur bei einer nennenswerten Partialdruckdifferenz des transportbestimmenden Gasteilchens oder Gaskomplexes statt, bevorzugterweise bei einer Partialdruckdifferenz von etwa $\Delta p \geq 10^{-5}$ bar, statt. Che-

mische Transportreaktionen, hierin auch als CT bezeichnet, bieten den Vorteil, dass die Metalle mit Hilfe eines sogenannten Transportmittels als Gasteilchen oder unter Zusatz eines Aluminiumhalogenids als Gaskomplex gelöst werden, und nach Diffusion, bzw. Diffusion und teilweise Konvektion, an einer anderen Stelle innerhalb eines, bevorzugterweise hermetisch verschließbaren, Reaktors, bspw. in Form eines Rohres, durch Rückreaktion wieder als Metall oder intermetallische Phase oder Boride bzw. Nitride abgeschieden werden. Mit anderen Worten bleibt vorteilhafterweise die Oxidationsstufe des Ausgangsstoffes bevorzugterweise erhalten, sodass die gewonnenen Metalle, deren intermetallischen Phasen oder Boride bzw. Nitride direkt wieder eingesetzt werden können (Neddermann, Ralf, "Chemischer Transport intermetallischer Phasen einiger hochschmelzender Metalle"; Dissertation 1997). Dies ist besonders vorteilhaft, da bevorzugterweise im Wesentlichen ohne Einsatz von Lösungsmitteln im eigentlichen Sinne gearbeitet werden kann, d.h. das Verfahren gemäß der vorliegenden Erfindung im Wesentlichen lösungsmittelfrei ist. Weiterhin können insbesondere kleine Mengen des interessierenden SE-Metalls unterhalb dessen Schmelzpunktes aus einem Ausgangsbodenkörper herausgelöst werden.

Dabei ist das Verfahren nach der vorliegenden Erfindung bevorzugterweise ein trockenes Verfahren, bei dem z.B. keine großen Mengen an Abwässern entstehen.

Da weiterhin bevorzugt ist, dass im Verfahren nach der vorliegenden Erfindung die eingesetzten Transportmittel größtenteils zurückgewonnen werden, ist das Verfahren nach der vorliegenden Erfindung im Vergleich zu nasschemischen Verfahren oder galvanischen Verfahren besonders umweltfreundlich. Dabei soll auch anerkannt werden, dass das Verfahren und die Vorrichtung nach der vorliegenden Erfindung vorteilhaft aus einem meist besonders komplex aufgebauten Ausgangsbodenkörper, bzw. Substrat, bspw. aus Schrott, insbesondere aus Elektroschrott, das SE-Metall als solches und/oder in Form einer intermetallischen Phase oder als Borid bzw. Nitrid zurückzugewinnen, indem eine Reaktion des SE-Metalls als solchem und/oder in Form einer intermetallischen Phase oder als Borid bzw. Nitrid mit dem Transportmittel ermöglicht ist.

Es ist dabei den vorliegenden Erfindern zu zuschreiben, dass ein Verfahren und eine Vorrichtung bereitgestellt werden, bei dem das Prinzip des chemischen Transports wie hierin beschrieben zur Rückgewinnung wenigstens eine SE-Metalls, insbesondere des SE-Metalls als solchem oder einer SE-haltigen intermetallischen Phase und/oder Borid und/oder Nitrid, verwendet wird. Eine derartige Rückgewinnung wenigstens eines SE-Metalls, insbesondere des SE-Metalls als solchem oder einer SE-haltigen intermetallischen Phase und/oder Borid und/oder Nitrid, wie hierin verwendet meint bevorzugt ein Recycling des SE-Metalls aus dem Substrat in Form des SE-Metalls als solchem und/oder in Form einer intermetallischen Phase oder als Borid bzw. Nitrid.

Es liegt dabei im Rahmen der vorliegenden Erfindung, dass ein erfindungsgemäßes Verfahren zur Rückgewinnung wenigstens eines SE-Metalls , insbesondere des SE-Metalls als solchem oder einer SE-haltigen intermetallischen Phase, aus einem das wenigstens ein SE-Metall aufweisenden Substrat, insbesondere einem das wenigstens ein SE-Metall in Form des SE-Metalls als solchem oder einer SE-haltigen intermetallischen Phase und/oder Borid und/oder Nitrid aufweisenden Substrat., wenigstens die folgenden Schritte umfasst: (a) Bereitstellen des Substrats in einer beheizbaren Ladezone L1 bei einer ersten Temperatur und einem ersten Druck, (b) Bereitstellen wenigstens einer Abscheidungsvorrichtung in einer beheizbaren Abscheidezone L2 bei einer zweiten Temperatur und einem zweiten Druck, (c) Chemisches Transportieren des SE-Metalls und/oder einer das SE-Metall enthaltenden Verbindung, in einem Temperatur- und/oder Druckgradienten von der Ladezone L1 zur Abscheidezone L2.

In den im Stand der Technik bekannten Verfahren zur SE-Metall-Rückgewinnung wandert der zu transportierende Ausgangsbodenkörper von der heißeren Quellenseite in die kältere Senkenseite in einem Temperaturgradienten $T_2 \rightarrow T_1$. Es soll verstanden werden, dass in Abkehr von der im Stand der Technik bekannten Lehre einen chemischen Transport ausgehend von einer höheren Beschickungstemperatur $T_2$ hin zu einer niedrigeren Abscheidungstemperatur $T_1$ durchzuführen, die vorliegenden Erfinder erkannt haben, dass das erfindungsgemäße Verfahren nach dem ersten Aspekt der Erfindung ein chemisches Transportieren von einer niedrigeren Beschickungstemperatur $T_1$ hin zu einer höheren Abscheidungstemperatur $T_2$ die wie hierin beschriebenen besonders vorteilhaften Ergebnisse liefert.

Der Erfindung liegt dabei die Überlegung zugrunde, dass der chemische Transport von SE-Metallen von einer Temperatur $T_1$ der Ladezone L1 hin zu einer Temperatur $T_2$ der Abscheidezone L2, wobei $T_2$ größer ist als $T_1$, mit einer negativen Standardreaktionsenthalpie $\Delta_R H$ aufgrund der Bildung von stabilen gasförmigen Halogeniden erfolgen kann. Dies bedeutet, dass zur höheren Temperatur die Löslichkeit der gasförmigen SE-Metallhalogenide im Temperaturgefälle von einer Beschickungstemperatur $T_1$ zu einer Abscheidungstemperatur $T_2$, wobei $T_2$ größer $T_1$ ist, im Bereich $T_2$ abnimmt, wodurch sich das SE-Metall bei höherer Temperatur aus der Gasphase abscheiden kann. Demselben Prinzip unterliegt der erfindungsgemäße chemische Transport intermetallischer Phasen der SE-Metalle, sowie der Boride und Nitride der SE-Metalle, wobei intermetallischen Phasen oder Boride bzw. Nitride der SE-Metalle bei einer Abscheidungstemperatur $T_2$ auch als Kristalle abgeschieden werden können.

Der Erfindung liegt dabei weiter die überraschende Erkenntnis zugrunde, dass SE-Metalle als solche, bzw. in Form intermetallischer Phasen der SE-Metalle, sowie der Boride und Nitride der SE-Metalle chemische Transport von SE-Metallen von einer Temperatur $T_1$ der Ladezone L1 hin zu einer Temperatur $T_2$ der Abscheidezone L2, wobei $T_2$ größer ist als $T_1$, mit einer negativen Standardreaktionsenthalpie $\Delta_R H$ aufgrund der Bildung von stabilen gasförmigen Halogeniden erfolgen kann. Es soll jedoch verstanden werden, dass nach Kenntnis der vorliegenden Erfinder insbesondere für Boride der SE-Metalle im Zusammenhang mit einem Verfahren zur Rückgewinnung von SE-Metallen der chemische Transport als solches hierin erstmalig vorgeschlagen wird.

Insoweit betrifft die vorliegende Erfindung in einem dritten Aspekt auch ein Verfahren zur Rückgewinnung wenigstens eines SE-Metalls aus einem das wenigstens eine SE-Metall aufweisende Substrat, wobei das Verfahren wenigstens die folgenden Schritte umfasst: (a) Bereitstellen des Substrats in einer beheizbaren Ladezone L1 bei einer Temperatur $T_2$ und einem Druck $P_2$, (b) Bereitstellen wenigstens einer Abscheidungsvorrichtung in einer beheizbaren Abscheidezone L2 bei einer Temperatur $T_1$ und einem Druck $P_1$, (c) Chemisches Transportieren des SE-Metalls und/oder einer das SE-Metall enthaltenden Verbindung, in einem Temperatur- und/oder Druckgradienten von der Ladezone L1 zur Abscheidezone L2, wobei $T_2$ größer $T_1$ ist, und wobei an der wenigstens einen Abscheidungsvorrichtung, das wenigstens eine SE-Metall als Borid des SE-Metalls abgeschieden wird.

Der vorliegenden Erfindung liegt gemäß ihrem ersten, zweiten und dritten Aspekt die überraschende Erkenntnis zugrunde, dass SE-Metalle mit Hilfe eines Transportmittels, bevorzugt als Gasteilchen oder Gasphasenkomplex, in einer Ladezone L1 gelöst werden, und durch ein chemisches Transportieren, bevorzugterweise der gebildeten gasförmigen Verbindung und/oder des Gasphasenkomplexes, entlang eines ersten Kanals in einem Temperatur- und/oder Druckgradienten von der Ladezone L1 zu einer Abscheidezone L2 transportiert und dort durch Rückreaktion wieder als Reinmetall oder intermetallische Phase oder Boride bzw. Nitride abgeschieden werden. Es ist dabei den vorliegenden Erfindern zu zuschreiben, erkannt zu haben, dass ein solcher chemischer Transport von SE-Metallen insbesondere gemäß des ersten Aspektes der Erfindung und insbesondere von einer Temperatur $T_1$ der Ladezone L1 hin zu einer Temperatur $T_2$ der Abscheidezone L2, wobei $T_2$ größer ist als $T_1$, zu einem vorteilhaften Abscheiden der SE-Metalle als Reinmetalle, deren intermetallischen Phasen oder Boride oder Nitride führt. Die Transportrichtung eines solchen Transports in einem Temperaturgefälle, insbesondere in einem Temperaturgefälle $T_1 \rightarrow T_2$, d.h. von einer kälteren Ladezone in eine heißere Senke bzw. Abscheidezone, hängt dabei von den thermodynamischen Gesetzmäßigkeiten der Transportreaktion ab. Bei einem Transport von Metallen scheidet sich demzufolge auf der Senkenseite bei einer Temperatur $T_2$ in umgekehrter Reaktion das interessierende SE-Metall aus der Gasphase ab, bspw. als Kristall oder aber als vorteilhafte Verbindungen wie bspw. intermetallische Phasen oder Boride der Form $SE_2Me_{14}B$, wobei SE ausgewählt ist aus der Gruppe der SE-Metalle, bevorzugterweise aus Nd, Pr und Dy; und Me ausgewählt ist aus der Gruppe Fe und Co; oder Nitride $Sm_2Fe_{18}N_3$ deren Transportreaktion ebenfalls exotherm also eine negative Reaktionsenthalpie $\Delta_R H$ besitzen werden, somit ebenfalls von kalt nach heiß und einer Transportrichtung von $T_1 \rightarrow T_2$ ablaufen.

In einer bevorzugten Ausführungsform der vorliegenden Erfindung ist eine Ladezone L1 derart ausgestaltet, dass diese das Überströmen eines kontinuierlichen Gasflusses über das Substrat erlaubt. Dabei ist die Ladezone bevorzugterweise derart ausgestaltet, dass diese eine relativ großflächige Verteilung des Substrats in der Ladezone erlaubt, damit das Substrat vom Transportmittel durch die laminare Strömung aufgenommen werden kann. Insbesondere kann der Kanal gemäß der vorliegenden Erfindung als ein einfaches Rohr, welches der laminaren Strömung des Transportmittels keinerlei Hindernis darstellt, ausgestaltet sein. Bevorzugt ist dabei diese Diffusionsstrecke relativ kurz, bspw. etwa 50 bis etwa 100 cm, bei größeren Anlagen bis zu etwa 200 cm. Der Kanal ist bevorzugt gerade, ungewinkelt und krümmungsfrei, da sich ggf. in derartigen Biegungen und Krümmungen Metall oder intermetallische Phasen aus der Gasphase ungewollt abscheiden können. Bevorzugt ist ein Kanal in der erfindungsgemäßen Vorrichtung derart ausgestaltet, dass dieser als ein horizontal angeordnetes Rohr, auf kürzestem Weg die Ladezone mit der Abscheidezone verbindet.

Der Begriff "intermetallische Phase" wie hierin verwendet bezeichnet bevorzugterweise eine homogene chemische Verbindung aus zwei oder mehr Metallen, wobei wenigstens eines der Metalle ein SE-Metall ist. Weiter bevorzugt bezeichnet der Begriff "intermetallische Phase" wie hierin verwendet eine stöchiometrische Zusammensetzung nach einem bestimmten Verteilungsgesetz, wie bspw. $SECo_5$. Es soll verstanden werden, dass im Gegensatz zu einer intermetallischen Phase eine Legierung eine statistische Verteilung beider Legierungspartner über das ganze Gitter hinweg ohne gesetzmäßigen Verteilungsplan wie z.B. bei Bronze (Cu/Sn) aufweist. Ebenfalls zeigen intermetallische Phasen im Unterschied zu Legierungen Gitterstrukturen, die sich von denen der konstituierenden Metalle unterscheiden. In ihrem Gitter herrscht eine Mischbindung aus einem metallischen Bindungsanteil und geringeren Atombindungs- bzw. Ionenbindungsanteilen, die in Überstrukturen resultiert.

Nach Kenntnis der vorliegenden Erfinder ist insbesondere ein chemischer Transport von SE-Metallen in Form ihrer dimeren Gasteilchen und insbesondere der chemische Transport von Neodym-Metall mit Halogenen sowie über Gaskomplexe aus gasförmigen SE-Halogeniden und gasförmigen Aluminiumhalogeniden bislang noch nicht beschrieben worden.

Die vorliegenden Erfinder haben erkannt, dass ein solcher chemische Transport von SE-Metallen, insbesondere über die dimeren Gasteilchen, von einer Temperatur $T_1$ der Ladezone L1 hin zu einer Temperatur $T_2$ der Abscheidezone L2, wobei $T_2$ größer ist als $T_1$, bspw. gemäß der nachfolgenden Formel erfolgen kann: $SE,s + 3 X_2,g \rightarrow SE_2X_6,g$, wobei SE ausgewählt ist aus der Gruppe der SE-Metalle umfassend Nd, Pr, Dy und Sm, und wobei X ausgewählt ist aus Cl, Br und I. Beispielsweise kann der chemische Transport des Neodym auch über die entsprechenden Neodymhalogenide

NdX$_3$ erfolgen, wobei X ausgewählt ist aus der Gruppe Cl, Br und I. Dies kann insbesondere auch unter Beteiligung der gasförmigen dimeren Verbindungen der Formel Nd$_2$X$_6$, erfolgen, wobei X ausgewählt ist aus Cl, Br, I. Dabei kann das erfindungsgemäße Verfahren und/oder die erfindungsgemäße Apparatur, bevorzugterweise in vorteilhafter Form fortgebildet werden, in dem Aluminiumhalogeniden der Formel AlX$_3$,s, bspw. AlCl$_3$,s, zugesetzt werden, wobei unter Bildung von Gaskomplexen wie bspw. NdAl$_2$Cl$_{9,g}$ oder NdAl$_3$Cl$_{12,g}$ die Transportrate von SE-Metallen gesteigert wird.

Dabei verlaufen die Reaktionen nach den folgenden Reaktionsgleichungen:

$$SE,s + 3/2\ X_{2,g} + Al_2X_{6,g} \rightarrow SEAl_2X_{9,g}, \text{ und } SE,s + 3/2\ X_{2,g} + 3/2\ Al_2X_{6,g} \rightarrow SEAl_3X_{12,g},$$

wobei SE jeweils ausgewählt ist aus der Gruppe der SE-Metalle umfassend Nd, Pr, Dy, Sm, und X jeweils ausgewählt ist aus Cl, Br und I.

Der Zusatz von Aluminiumhalogeniden der Formel AlX$_3$,s bspw. AlCl$_3$,s, im erfindungsgemäßen Verfahren eines chemischen Transports von einer Temperatur $T_1$ der Ladezone L1 hin zu einer Temperatur $T_2$ der Abscheidezone L2, wobei $T_2$ größer ist als $T_1$, bewirkt daher auch eine Steigerung der Transportrate von SE-Metall.

In diesem Zusammenhang haben die vorliegenden Erfinder erkannt, dass SE-Metalle und/oder deren intermetallische Phasen oder Verbindungen, die eine Standardbildungsenthalpie $\Delta_B$H von 0 bzw. nahe 0 haben, in einem chemischen Transportverfahren von einer Temperatur $T_1$ der Ladezone L1 hin zu einer Temperatur $T_2$ der Abscheidezone L2, wobei $T_2$ größer ist als $T_1$, transportiert werden können. Dies ist bei SE-Metallen ebenso der Fall, wie bei intermetallischen Phasen, deren Standardbildungsenthalpie $\Delta_B$H ebenfalls bei nahe 0 liegt. Bisher war für SE-Metalle nicht bekannt, dass auch diese und/oder ihre intermetallischen Phasen, Boride oder Nitride von einer Temperatur $T_1$ der Ladezone L1 hin zu einer Temperatur $T_2$ der Abscheidezone L2, wobei $T_2$ größer ist als $T_1$, transportiert werden können.

Der vorliegenden Erfindung liegt die Annahme der Erfinder zugrunde, dass bevorzugterweise auch die Boride und Nitride der SE-Metalle eine Standardbildungsenthalpie $\Delta_B$H von 0 bzw. nahe 0 aufweisen, da die Bildung von gasförmigen SE-Halogeniden oder die Bildung von Gasphasenkomplexen mit AlX$_3$,g exotherm, d.h. mit einer negativen Reaktionsenthalpie $\Delta_R$H verlaufen sollte.

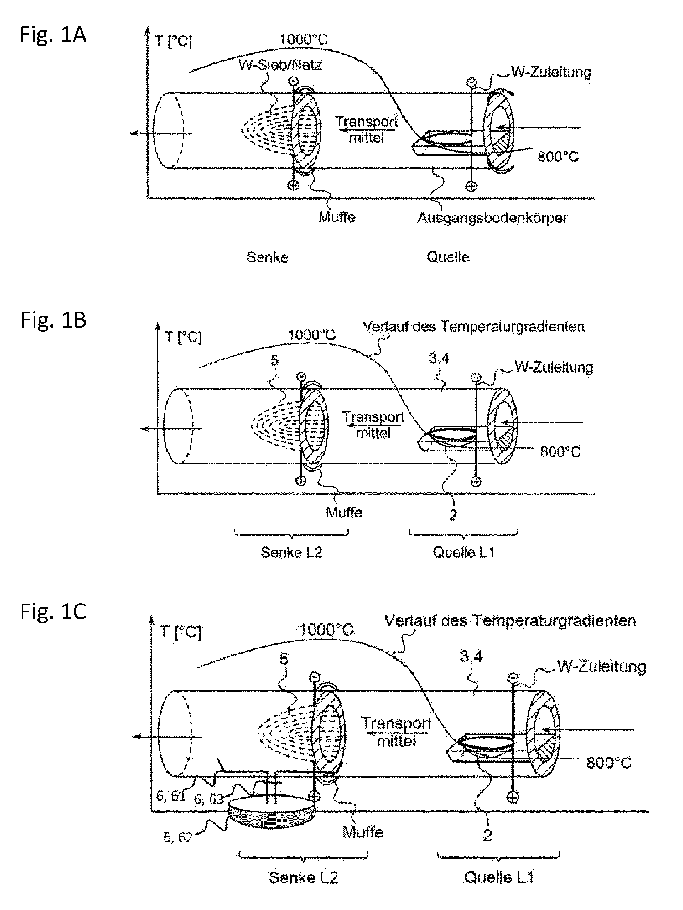

Die vorliegende Erfindung beschreibt insbesondere ein Verfahren zum Recycling, d.h. Rückgewinnen, von Selten-Erd-Metallen (SE-Metallen) wie bspw. Neodym, Dysprosium, Samarium und Praseodym, die bspw. Bestandteile von Elektronikschrott, insbesondere von Magneten, sind, mittels eines chemischen Transports, insbesondere mit Hilfe einer erfindungsgemäßen Apparatur, einem speziellen Mehr-Zonen-Ofen (siehe bspw. Fig. 1, 2 oder 3). Diese erfindungsgemäße Apparatur ist ebenfalls Bestandteil der Erfindung und ermöglicht, bevorzugterweise, die kontinuierliche Abscheidung und Gewinnung von SE-Metallen auf der Senkenseite insbesondere die Abscheidung von SE-Metall auf der heißeren Senkenseite bei $T_2$, sowie eine bequeme Beschickung auf der Quellenseite.

Zu den Selten-Erd-Metallen, oder wie hierin austauschbar verwendet "SE-Metallen", gehören die chemischen Elemente der 3. Nebengruppe des Periodensystems mit Ausnahme des Actiniums, sowie die Lanthanoide, d.h. insgesamt also 17 bekannte Elemente. Es soll in diesem Zusammenhang verstanden werden, dass das erfindungsgemäße Verfahren und/oder die erfindungsgemäße Apparatur bevorzugterweise für ein jedes SE-Metall und dessen intermetallische Phasen oder Boride oder Nitride geeignet ist und nicht auf eine in Beispielen oder beispielhaft genannte Auswahl von einigen oder einem SE-Metall beschränkt ist. SE-Metalle werden üblicherweise in leichte und schwere SE-Metalle unterschieden: Die leichten SE-Metalle umfassen, Scandium mit der Ordnungszahl 21 und einer Schmelztemperatur von 1539°C und üblicherweise abgekürzt als "Sc", Lanthan mit der Ordnungszahl 57 und einer Schmelztemperatur von 920°C und üblicherweise abgekürzt als "La", Cer mit der Ordnungszahl 58 und einer Schmelztemperatur von 798°C und üblicherweise abgekürzt als "Ce", Praseodym mit der Ordnungszahl 59 und einer Schmelztemperatur von 935°C und üblicherweise abgekürzt als "Pr", Neodym mit der Ordnungszahl 60 und einer Schmelztemperatur von 1016°C und üblicherweise abgekürzt als "Nd", Promethium mit der Ordnungszahl 61 und einer Schmelztemperatur von 1168°C und üblicherweise abgekürzt als "Pm", Samarium mit der Ordnungszahl 62 und einer Schmelztemperatur von 1072°C und üblicherweise abgekürzt als "Sm" und Europium mit der Ordnungszahl 63 und einer Schmelztemperatur von 826°C und üblicherweise abgekürzt als "Eu". Die schweren SE-Metalle umfassen Yttrium mit der Ordnungszahl 39 und einer Schmelztemperatur von 1532°C und üblicherweise abgekürzt als "Y", Gadolinium mit der Ordnungszahl 64 und einer Schmelztemperatur von 1312°C und üblicherweise abgekürzt als "Gd", Terbium mit der Ordnungszahl 65 und einer Schmelztemperatur von 1356°C und üblicherweise abgekürzt als "Tb", Dysprosium mit der Ordnungszahl 66 und einer Schmelztemperatur von 1407°C und üblicherweise abgekürzt als "Dy", Holmium mit der Ordnungszahl 67 und einer Schmelztemperatur von 1470°C und üblicherweise abgekürzt als "Ho", Erbium mit der Ordnungszahl 68 und einer Schmelztemperatur von 1522°C und üblicherweise abgekürzt als "Er", Thulium mit der Ordnungszahl 69 und einer Schmelztemperatur von 1545°C und üblicherweise abgekürzt als "Tm", Ytterbium mit der Ordnungszahl 70 und einer Schmelztemperatur von 816°C und üblicherweise abgekürzt als "Yb", und Lutetium mit der Ordnungszahl 71 und einer Schmelztemperatur von 1675°C und üblicherweise abgekürzt als "Lu". Es soll verstanden werden, dass bevorzugterweise die Abscheidung der SE-Metalle oder der intermetallischen Phasen, insbesondere SECo$_5$ oder SE$_2$Me$_{17}$ oder SE$_2$Me$_{14}$B oder Sm$_{22}$Fe$_{18}$N$_3$, im Verfahren gemäß der vorliegenden Erfindung aufgrund der geringen Bildungsenthalpie der Ausgangsstoffe auf der heißeren Seite bei einer Abscheidungstemperatur $T_2$ erfolgt, bzw. die Wanderung der SE-Halogenide erfolgt von der kälteren Quelle mit Temperatur $T_1$ mit dem Ausgangsbodenkörper bzw. Substrat zur heißeren Senkenseite mit der Abscheidezone mit Temperatur $T_2$.

Es soll ebenfalls verstanden werden, dass für die Rückgewinnung von kleinsten verbauten Mengen von seltenen Erdmetallen im Milligramm Bereich die chemische Transportmethode nach der vorliegenden Erfindung geradezu ideal ist, da sie bevorzugt weit unterhalb des Schmelzpunktes einer Substanz ohne Einsatz von flüssigen umweltschädlichen Lösungsmitteln auskommt, wodurch bevorzugterweise keine großen Mengen an Abwässern entstehen. Im Verfahren nach der vorliegenden Erfindung wird, bevorzugterweise, das Transportmittel immer wieder im Kreislauf dem Ausgangsbodenkörper bzw. Substrat zugeführt. Somit wendet sich die vorliegende Erfindung in vorteilhafterweise ab von den im Stand der Technik bekannten Verfahren, bei denen ein chemischer Transport von einer höheren Temperatur hin zu einer niedrigeren Transport erfolgt, wobei jeweils Halogenide der SE-Metalle erzeugt werden. Es wird verstanden werden, dass im Gegensatz zu dem erfindungsgemäßen Verfahren in dem das Transportmittel rückgewonnen wird und, bevorzugterweise wieder im Kreislauf bei einer Temperatur $T_1$ mit dem Ausgangsmaterial in Reaktion treten kann, gemäß der Lehre des Standes der Technik das Transportmittel, z.B. Chlor oder Jod stets verbraucht wird. Dies ist insbesondere der Fall, wenn im Ausgangsbodenkörper die Seltenen Erden als Metall oder intermetallische Verbindung oder als Borid oder Nitrid vorgelegt werden und in der Senke auf der kälteren Seite als Halogenid abgeschieden wird. Daher ist das erfindungsgemäße Verfahren deutlich wirtschaftlicher. Es soll auch verstanden werden, dass der Ausgangsbodenkörper bzw. Substrat ein das interessierende wenigstens eine SE-Metall umfassende Substrat umfasst und bevorzugt auf der Quellenseite einer Apparatur, insbesondere einer Apparatur nach der vorliegenden Erfindung, angeordnet ist.

Die Reaktionsführung gemäß der vorliegenden Erfindung ist relativ einfach, und die Mengen, die über diese Methode gewonnen werden können, sind berechenbar, sofern die thermodynamischen Daten der beteiligten Reaktionspartner bekannt sind bzw. validiert wurden. Erfolgt der chemische Transport über Diffusion im Temperaturgradienten lassen sich die Transportraten nach der im Folgenden dargestellten Formel 1 im geschlossenen System berechnen (Schäfer, 1962):

$$\dot{n}_A = \frac{a}{c} \cdot \frac{\Delta p_C \cdot q \cdot \overline{T}^{0,8}}{\sum p \cdot s} \cdot 1{,}8 \cdot 10^{-4}$$

(Formel 1), wobei $n_A$ für die Anzahl der Mole an transportierten Ausgangsbodenkörper /Zeit (mol/h),

a,c für den Stöchiometriekoeffizienten der Transportgleichung,

$\Delta p_c$ für die Differenz der Gleichgewichtsdrucke (atm),

$\sum p$ für den Gesamtdruck (atm),

T für die mittlere Temperatur über der Diffusionsstrecke,

q für den Querschnitt, und

s für die Diffusionsstrecke

steht.

Ein Fachmann wird unmittelbar erkennen, dass zur Berechnung der Transportraten im offenen System die Modellrechnungen entsprechend variiert werden müssen.

Der Begriff "offenes System" wie hierin verwendet bezeichnet bevorzugterweise ein System, bei dem das Transportmittel in eine Richtung strömt, wobei bevorzugterweise die Richtung auch die Transportrichtung der gasförmigen Teilchen ist, die für den Transport des Ausgangsbodenkörpers verantwortlich sind. Beispielsweise erfolgt im Falle eines Transportes von heiß nach kalt, d.h. $T_2 \text{-> } T_1$, der Transport des Ausgangsbodenkörpers immer nur in eine Richtung, welche auch die Richtung des Transportmittelstromes ist. Das Transportmittel kann jedoch erneut durch ein Kreisprozess der heißeren Seite wieder zugeführt werden. Dagegen bezeichnet der Begriff "geschlossenes System" wie hierin verwendet, bevorzugterweise ein System, bei dem das Transportmittel entgegen den gasförmigen Teilchen, die für den Transport des Ausgangsbodenkörpers verantwortlich sind, wandert: Beispielsweise wird in einem solchen geschlossenen System bei einem Transport von kalt nach heiß, das Transportmittel zurück zur kalten Seite wandern, sodass der Reaktion kein weiteres sich verbrauchendes Transportmittel zugefügt werden muss. In einem "offenen System" ist dagegen eines solche Rückwanderung im gleichen Rohr entgegen der Transportrichtung der zu transportierenden gasförmigen Teilchen, bspw. SE-Halogeniden, somit nicht möglich, sondern muss aufgrund der Strömung in einem Kreisprozess dem Ausgangsbodenkörper zugeführt werden.

Die Transportraten im Milligramm-Bereich werden als ideal für die Rückgewinnung der kleinen in Elektronikbauteilen verbauten Mengen an SE-Metallen angesehen, so z.B. finden sich durchschnittlich etwa 3,6 g Neodym in Festplatten oder bis zu etwa 40 mg Nd pro Mobiltelefon mit Vibrationsmotor (Meyer, Franziska, "Recycling von Neodym aus NdFeB-Magneten in Elektroaltgeräten", 2012, Hochschule für angewandte Wissenschaften, Hamburg).

Neodym wird u.a. als Permanentmagnet in Form der Verbindung $Nd_2Fe_{14}B$ eingesetzt. Festplatten als Quelle für das Neodym sind sehr leicht isolierbar. Ferner können die magnetischen Eigenschaften des Materials für weitere Anreicherungen von Neodym im Granulat von Vorteil sein.

In einer bevorzugten Ausführungsform der Apparatur gemäß der vorliegenden Erfindung ist die Apparatur ein Mehrzonenofen. Bevorzugterweise ist die Apparatur nach der vorliegenden Erfindung ein Zwei-Zonen-Ofen mit zwei Temperaturbereichen mit einer Beschickungsvorrichtung für den Ausgangsbodenkörper bzw. Substrat bei $T_1$, der sogenannten Quelle, in der die Reaktion des Ausgangsbodenkörpers bzw. Substrats mit dem Transportmittel stattfindet, wobei das SE-Metall in der Gasphase gelöst wird. Als Quelle wird bevorzugterweise die Seite des Ofens bezeichnet, in der sich der Ausgangsbodenkörper bzw. Substrat in einer Vertiefung befindet. Das Transportmittel, welches über den Ausgangsbodenkörper bzw. Substrat hinwegströmt, dient dazu, den Ausgangsbodenkörper auf der Quellenseite bei einer bestimmten Temperatur $T_1$ in der Gasphase als Halogenid bzw. bei Beteiligung von Sauerstoff als Oxidhalogenid zu lösen und im strömenden offenen System zur Senkenseite des Ofens zu transportieren. Eine Quelle, oder Quellenseite, oder Quellenzone, wie hierin miteinander austauschbar verwendet bezeichnet, bevorzugterweise eine Ladezone L1.

Auf der Senkenseite scheidet sich bei einer anderen Temperatur $T_2$ in umgekehrter Reaktion das SE-Metalls aus der Gasphase entweder als reines SE-Metall, oder entsprechend den Reaktionsbedingungen als intermetallische Phase der Zusammensetzung $SECo_5$ (SE=Sm, Pr) oder Verbindungen des Typs $SE_2Me_{17}$, wobei SE Sm ist und Me ausgewählt ist aus der Gruppe Fe, Cu, Co, Zr und Hf, oder direkt als Verbindungen der Zusammensetzung $SE_2Me_{14}B$, wobei SE ausgewählt ist aus der Gruppe Nd, Pr und Dy, und Me ausgewählt ist aus der Gruppe Fe und Co (Boride) oder als $Sm_2Fe_{18}N_3$ (Nitride) ab. Die intermetallischen Phasen könnten als Ausgangsstoffe für Permanentmagnete in der Industrie Verwendung finden. Eine Senke, oder Senkenseite, oder Senkenzone, wie hierin miteinander austauschbar verwendet bezeichnet, bevorzugterweise eine Abscheidezone L2.

Ferner können im Senkenbodenkörper andere Elemente, wie Dysprosium und Kobalt, die zur Dotierung der Permanentmagnete eingesetzt werden, in vorteilhafterweise mit abgeschieden werden. Es kann, bspw. Co im Permanentmagnet bei der Abscheidung mit eingelagert werden und dadurch, bevorzugterweise die Curie-Temperatur steigern. Das Co oder Dy lagert sich dann bspw. im Kristall eines abgeschiedenen Borids oder Nitrids mit ein. Da die Kristallisation aus der Gasphase erfolgt, kann das Co sehr leicht eingebaut werden, leichter als aus flüssigen Schmelzen.

Bevorzugterweise können durch das erfindungsgemäße Verfahren und/oder die erfindungsgemäße Apparatur Permanentmagnete mit verbesserten magnetischen Eigenschaften synthetisiert werden, verglichen mit den bislang im Ausgangsbodenkörper bzw. Substrat nach dem Stand der Technik verwendeten.

Die Apparatur nach der vorliegenden Erfindung wird mit wenigstens zwei unterschiedlichen Temperaturzonen betrieben, sodass wenigstens ein Temperaturgradient zwischen der Quellenseite mit Temperatur $T_1$ und der Senkenseite mit Temperatur $T_2$ besteht und die Gasteilchen bzw. Gaskomplexe, bevorzugterweise nur aufgrund der Partialdruckdifferenz von der Quellenseite zur Senkenseite wandern können. Es soll in diesem Zusammenhang jedoch verstanden werden, dass bevorzugterweise in dem erfindungsgemäßen Verfahren bzw. in der erfindungsgemäßen Apparatur ein Gasstrom, bevorzugterweise ein permanenter Gasstrom, aufrechterhalten wird, der über Quelle und Senke strömt. Es soll verstanden werden, dass ein solcher Gasstrom im Zusammenhang mit der vorliegenden Erfindung bevorzugt überwiegend aus Transportmittel besteht und von der Quellenseite in Richtung Senkenseite geblasen wird. Dadurch dass gemäß der vorliegenden Erfindung das Transportmittel bevorzugterweise zurückgebildet wird, reicht es aus nach erfolgtem Zustrom einer ausreichenden Menge an Transportmittel, diesen Zustrom abzustellen. Durch die unterschiedlichen Temperaturen bildet sich ein Diffusionsgefälle aus, was den Transport ermöglicht, ein Gebläse wäre somit nicht erforderlich. In einer bevorzugten Ausführungsform des erfindungsgemäßen Verfahrens umfasst das Verfahren einen Schritt des Bereitstellens eines Transportmittels, insbesondere ein Gebläse-freies Bereitstellen eines Transportmittels. Bevorzugterweise umfasst das erfindungsgemäße Verfahren in einem Schritt (c) des Chemisches Transportieren des SE-Metalls und/oder einer das SE-Metall enthaltenden Verbindung, ein Bereitstellen eines Transportmittels.

Es soll in diesem Zusammenhang verstanden werden, dass entgegen der im Stand der Technik bekannten Verfahren im erfindungsgemäßen Verfahren kein kontinuierlicher Strom von Transportmittel mit einem Gebläse aufgebaut und aufrechterhalten werden muss, da nicht wie im Stand der Technik permanent Transportmittel verloren geht. In der erfindungsgemäßen Vorrichtung und/oder dem erfindungsgemäßen Verfahren kann somit wahlweise auf einen permanent erzeugten Gasstrom verzichtet werden, da bei der erfindungsgemäßen Lehre ein echter chemischer Transport stattfindet, der bevorzugterweise die Rückbildung des Transportmittels umfasst.

Es wird daher auch unmittelbar verstanden werden, dass im erfindungsgemäßen Verfahren und/oder der erfindungsgemäßen Apparatur der Transport bevorzugterweise über eine Partialdruckdifferenz der transportierenden Gasteilchen bei $T_1$ und $T_2$ erfolgt und die Konvektion nach erfolgter Zufuhr des Transportmittels nur noch in geringerem Ausmaß vorhanden ist. Im Falle eines Transportes von heiß nach kalt und dem permanenten Zuführen von Transportmittel gemäß den Verfahren des Standes der Technik ist ein Konvektionsanteil deutlich größer. Das erfindungsgemäße Verfahren ist vorteilhaft, in dem die Gasteilchen und/oder Gasphasenkomplexe relativ schnell von der Quellenseite mit Temperatur $T_1$ weg und zur Senkenseite mit Temperatur $T_2$ gebracht werden, was bevorzugterweise zu einer Bildung von ggf. relativ kleinen Kristallen der intermetallischen Phasen oder der Boride bzw. Nitride führt. Im Unterschied zu herkömmlichen Zwei-Zonen-Öfen, die in der Wissenschaft eingesetzt werden, besteht der vorliegende Ofen mindestens aus 3 Teilen, die sich ineinander schieben lassen. In einer bevorzugten Ausführungsform sind die Teile der erfindungsgemäßen Apparatur, insbesondere die Zonen eines Mehrzonenofens lösbar miteinander verbunden. Dies ist vorteilhaft, indem sich die einzelnen Teile leicht auseinander nehmen lassen. Der Fachmann kennt hierzu je nach Anforderung verschiedene Möglichkeiten. Bei Quarzrohren, bspw. hat man entsprechende Schliffe, bei einem Korundrohr können bspw. Flansche angeordnet sein.

In einem ersten Bereich (Ladezone L1) ist bevorzugterweise die Beschickungsvorrichtung für den Ausgangsstoff, d.h. das interessierende wenigstens eine SE-Metall enthaltende Substrat.

In einem zweiten mittleren Bereich befindet sich die Diffusionsstrecke, durch die der Temperaturgradient verläuft. Der Begriff "Diffusionsstrecke" wie hierin verwendet bezeichnet bevorzugterweise die Strecke vom Mittelpunkt der Quelle bzw. Ladezone L1 zum Mittelpunkt der Senke bzw. Abscheidezone L2. In der Abscheidezone L2 befindet sich die wenigstens eine Abscheidungsvorrichtung, das wichtigste Bauteil, an dem sich die SE-Metalle aus der Gasphase abscheiden. Diese Aufteilung des Ofens ermöglicht auf vorteilhafte Weise ein erleichtertes Auseinanderbauen der Apparatur nach der vorliegenden Erfindung und somit die schnelle Gewinnung der recycelten SE-Metalle, entweder in metallischer Form oder als Verbindung wie intermetallische Phasen oder Boride und Nitride.

In einer bevorzugten Ausführungsform des Verfahrens zur Rückgewinnung eines SE-Metalls aus einem SE-metallhaltigen Substrat nach der vorliegenden Erfindung, umfasst das Verfahren einen Schritt des chemischen Transports aus dem Substrat zu einer Abscheidungsvorrichtung.

In einer bevorzugten Ausführungsform des Verfahren nach der vorliegenden Erfindung umfasst ein Schritt (c) des chemischen Transportierens des SE-Metalls und/oder einer das SE-Metall enthaltenden Verbindung, in einem Temperatur- und/oder Druckgradienten von der Ladezone L1 zur Abscheidezone L2, wobei $T_2$ größer $T_1$ ist, auch ein Transportieren wenigstens eines weiteren SE-Metalls und/oder einer das wenigstens eine weitere SE-Metall enthaltenden Verbindung und/oder ein Transportieren wenigstens eines nicht SE-Metalls und/oder einer das wenigstens eine nicht SE-Metall enthaltenden Verbindung.

Es soll in diesem Zusammenhang verstanden werden, dass dabei das Substrat das wenigstens eine SE-Metall und/oder das wenigstens eine weitere SE-Metall und/oder das wenigstens eine nicht SE-Metall umfassen kann. Bei einem chemischen Transport nach dem Verfahren gemäß der vorliegenden Erfindung können vorteilhaft weitere SE-Metalle und/oder Nicht-SE-Metalle in dem Substrat enthalten sein und mittels des erfindungsgemäßen Verfahrens zurückgewonnen werden.

Dies ist insbesondere dann möglich, wenn das interessierende weitere SE-Metall und/oder das interessierende Nicht-SE-Metall in dem Substrat vorhanden ist und ein chemischer Transport in dem gewählten Temperatur- und/oder Partialdruckgefälle möglich ist.

Das erfindungsgemäße Verfahren umfasst somit in besonders bevorzugten Ausführungsformen auch einen Schritt des chemischen Transportierens, bevorzugterweise von $T_1$ nach $T_2$, wenigstens eines der Elemente ausgewählt aus der Gruppe umfassend Wolfram, Tantal, Molybdän, Niob, Iridium, Ruthenium, Hafnium, Rhodium, Vanadin, Chrom, Zirkonium, Platin, Titan; Thorium, Palladium, Eisen, Yttrium, Nickel, Kobalt, Kupfer, Gold, Silber, und/oder Germanium.

In einer bevorzugten Ausführungsform umfasst das erfindungsgemäße Verfahren einen Schritt des chemischen Transports von Platin, das einer Schmelztemperatur von 1772 °C hat, wobei der chemische Transport bevorzugterweise ein chemischer Transport ist von $T_1$= etwa 600°C nach $T_2$= etwa 800°C, wobei bevorzugterweise als Transportmittel Chlor/$AlCl_3$ dient. In einer bevorzugten Ausführungsform umfasst das erfindungsgemäße Verfahren einen Schritt des chemischen Transports von Gold, das einer Schmelztemperatur von 1064 °C hat, wobei der chemische Transport bevorzugterweise ein chemischer Transport ist von $T_1$= etwa 300°C nach $T_2$ = etwa 500°C, wobei bevorzugterweise als Transportmittel Chlor dient. In einer bevorzugten Ausführungsform umfasst das erfindungsgemäße Verfahren einen Schritt des chemischen Transports von Germanium das einer Schmelztemperatur von 937 °C hat, bevorzugterweise einen chemischen Transport von $T_2$= etwa 895°C nach $T_1$ = etwa 620°C, wobei bevorzugterweise als Transportmittel Jod dient. In einer bevorzugten Ausführungsform umfasst das erfindungsgemäße Verfahren einen Schritt des chemischen Transports von Kupfer das einer Schmelztemperatur von 1083 °C hat, bevorzugterweise einen chemischen Transport von $T_1$= etwa 400°C nach $T_2$ = etwa 890°C, wobei bevorzugterweise als Transportmittel $I_2$ dient. In einer bevorzugten Ausführungsform umfasst das erfindungsgemäße Verfahren einen Schritt des chemischen Transports von Rhodium das einer Schmelztemperatur von 1966 °C hat, wobei der chemische Transport bevorzugterweise ein chemi-scher Transport ist von $T_1$= etwa 600°C nach $T_2$ = etwa 800°C, wobei bevorzugterweise als Transportmittel $Cl_2$/$AlCl_3$ dient. In einer bevorzugten Ausführungsform umfasst das erfindungsgemäße Verfahren einen Schritt des chemischen Transports von Wolfram das einer Schmelztemperatur von 3410°C, wobei der chemische Transport bevorzugterweise ein chemischer Transport ist von $T_1$= etwa 800°C nach $T_2$ = etwa 1000°C, wobei bevorzugterweise als Transportmittel $I_2$/$H_2O$ dient. In einer bevorzugten Ausführungsform umfasst das erfindungsgemäße Verfahren einen Schritt des chemischen Transports von Tantal das einer Schmelztemperatur von 2996°C hat, wobei der chemische Transport bevorzugterweise ein chemischer Transport ist von $T_1$= etwa 495°C nach $T_2$ = etwa 1100°C, wobei bevorzugterweise als Transportmittel $I_2$ dient. In einer bevorzugten Ausführungsform umfasst das erfindungsgemäße Verfahren einen Schritt des chemischen Transports von Molybdän das einer Schmelztemperatur von 2617°C hat, wobei der chemische Transport bevorzugterweise ein chemischer Transport ist von $T_1$= etwa 1050°C nach $T_2$ = etwa 1150°C, wobei bevorzugterweise als Transportmittel $I_2/H_2O$ dient. In einer bevorzugten Ausführungsform umfasst das erfindungsgemäße Verfahren einen Schritt des chemischen Transports von Niob das einer Schmelztemperatur von 2477°C hat, wobei der chemische Transport bevorzugterweise ein chemischer Transport ist von $T_1$= etwa 470°C nach $T_2$ = etwa 1200°C, wobei bevorzugterweise als Transportmittel $I_2$ dient. In einer bevorzugten Ausführungsform umfasst das erfindungsgemäße Verfahren einen Schritt des chemischen Transports von Iridium das einer Schmelztemperatur von 2410°C hat, wobei der chemische Transport bevorzugterweise ein chemischer Transport ist von $T_1$= etwa 600°C nach $T_2$ = etwa 800°C, wobei bevorzugterweise als Transportmittel $Cl_2/AlCl_3$ dient. In einer bevorzugten Ausführungsform umfasst das erfindungsgemäße Verfahren einen Schritt des chemischen Transports von Ruthenium das einer Schmelztemperatur von 2250°C hat, wobei der chemische Transport bevorzugterweise ein chemischer Transport ist von $T_1$= etwa 450°C nach $T_2$ = etwa 600°C, wobei bevorzugterweise als Transportmittel $Cl_2/AlCl_3$ dient. In einer bevorzugten Ausführungsform umfasst das erfindungsgemäße Verfahren einen Schritt des chemischen Transports von Hafnium das einer Schmelztemperatur von 2150°C hat, wobei der chemische Transport bevorzugterweise ein chemischer Transport ist von $T_1$= etwa 400°C nach $T_2$ = etwa 1600°C, wobei bevorzugterweise als Transportmittel $I_2$ dient. In einer bevorzugten Ausführungsform umfasst das erfindungsgemäße Verfahren einen Schritt des chemischen Transports von Vanadin das einer Schmelztemperatur von 1890°C hat, wobei der chemische Transport bevorzugterweise ein chemischer Transport ist von $T_1$= etwa 800°C nach $T_2$ = etwa 1200°C, wobei bevorzugterweise als Transportmittel $I_2$ dient. In einer bevorzugten Ausführungsform umfasst das erfindungsgemäße Verfahren einen Schritt des chemischen Transports von Chrom das einer Schmelztemperatur von 1857°C hat, wobei der chemische Transport bevorzugterweise ein chemischer Transport ist von $T_1$= etwa 790°C nach $T_2$ = etwa 1000°C, wobei bevorzugterweise als Transportmittel $I_2$ dient. In einer bevorzugten Ausführungsform umfasst das erfindungsgemäße Verfahren einen Schritt des chemischen Transports von Zirkonium das einer Schmelztemperatur von 1852°C hat, wobei der chemische Transport bevorzugterweise ein chemischer Transport ist von $T_1$= etwa 650°C nach $T_2$ = etwa 2000°C, wobei bevorzugterweise als Transportmittel $I_2$ dient. In einer bevorzugten Ausführungsform umfasst das erfindungsgemäße Verfahren einen Schritt des chemischen Transports von Titan das einer Schmelztemperatur von 1660°C hat, wobei der chemische Transport bevorzugterweise ein chemischer Transport ist von $T_1$= etwa 500°C nach $T_2$ = etwa 1100°C, wobei bevorzugterweise als Transportmittel $I_2$ dient. In einer bevorzugten Ausführungsform umfasst das erfindungsgemäße Verfahren einen Schritt des chemischen Transports von Thorium das einer Schmelztemperatur von 1568°C hat, wobei der chemische Transport bevorzugterweise ein chemischer Transport ist von $T_1$= etwa 470°C nach $T_2$ = etwa 1200°C, wobei bevorzugterweise als Transportmittel $I_2$ dient. In einer bevorzugten Ausführungsform umfasst das erfindungsgemäße Verfahren einen Schritt des chemischen Transports von Palladium das einer Schmelztemperatur von 1552°C hat, wobei der chemische Transport bevorzugterweise ein chemischer Transport ist von $T_1$= etwa 400°C nach $T_2$ = etwa 600°C, wobei bevorzugterweise als Transportmittel $Cl_2/AlCl_3$ dient. In einer bevorzugten Ausführungsform umfasst das erfindungsgemäße Verfahren einen Schritt des chemischen Transports von Eisen das einer Schmelztemperatur von 1535°C hat, wobei der chemische Transport bevorzugterweise ein chemischer Transport ist von $T_1$= etwa 500°C nach $T_2$ = = etwa 1100°C, wobei bevorzugterweise als Transportmittel $I_2$ dient. In einer bevorzugten Ausführungsform umfasst das erfindungsgemäße Verfahren einen Schritt des chemischen Transports von Yttrium das einer Schmelztemperatur von 1523°C hat, wobei der chemische Transport bevorzugterweise ein chemischer Transport ist von $T_1$= etwa 500°C nach $T_2$ = etwa 1200°C, wobei bevorzugterweise als Transportmittel $I_2$ dient. In einer bevorzugten Ausführungsform umfasst das erfindungsgemäße Verfahren einen Schritt des chemischen Transports von Nickel das einer Schmelztemperatur von 1495°C hat, wobei der chemische Transport bevorzugterweise ein chemischer Transport ist von $T_1$= etwa 860°C nach $T_2$ = etwa 1030°C, wobei bevorzugterweise als Transportmittel $I_2$ dient. In einer bevorzugten Ausführungsform umfasst das erfindungsgemäße Verfahren einen Schritt des chemischen Transports von Kobalt das einer Schmelztemperatur von 1453°C hat, wobei der chemische Transport bevorzugterweise ein chemischer Transport ist von $T_1$= etwa 800°C nach $T_2$ = etwa 900°C, wobei bevorzugterweise als Transportmittel $I_2$ dient. In einer bevorzugten Ausführungsform umfasst das erfindungsgemäße Verfahren einen Schritt des chemischen Transports von Silber das einer Schmelztemperatur von 962°C hat, wobei der chemische Transport bevorzugterweise ein chemischer Transport ist von $T_1$= etwa 625°C nach $T_2$ = etwa 715°C, wobei bevorzugterweise als Transportmittel $I_2$ dient. Der Fachmann wird jedoch unmittelbar erkennen, dass weitere Nicht-SE-Metalle mit dem erfindungsgemäßen Verfahren vorteilhaft rückgewonnen werden können.

In einer bevorzugten Ausführungsform des Verfahrens zur Rückgewinnung eines SE-Metalls aus einem SE-metallhaltigen Substrat nach der vorliegenden Erfindung durch chemischen Transport, umfasst das Verfahren wenigstens die folgenden Schritte, wobei die Schritte, bevorzugterweise, in der angegebenen Reihenfolge durchgeführt werden: einen Schritt des Bereitstellen eines SE-metallhaltigen Substrats, eines Transportmittels und einer Abscheidungsvorrichtung; einen Schritt des Auswählens einer Temperatur $T_1$ und eines Druckes $P_1$ auf der Quellenseite, wobei das Transportmittel bei $T_1$ und $P_1$ gasförmig ist und mit dem SE-Metall zu einer gasförmigen Verbindung, einem Halogenid oder Oxidhalogenid des Chlors, Broms oder Jods, insbesondere bei geringfügiger Beteiligung von Sauerstoff, oder unter Zusatz von festem Aluminiumhalogenid des Chlors, Broms oder Jods, welches bei $T_1$ und $P_1$ gasförmig ist und mit den gasförmigen SE-Verbindungen zu Gasphasenkomplexen reagieren kann; einen Schritt des Auswählens einer Tempe-

ratur $T_2$ und eines Druckes $P_2$, wobei die in einem Schritt des Auswählens einer Temperatur $T_1$ und eines Druckes $P_1$ bezeichnete gasförmige Verbindung bei $T_2$ und $P_2$ in (i) das elementare SE-Metall oder eine intermetallische Phase enthaltend das SE-Metall und (ii) das Transportmittel oder eine andere Verbindung zerfallen kann, wobei $T_2$ sich von $T_1$ unterscheidet und/oder $P_2$ sich von $P_1$ unterscheidet; einen Schritt des Erhitzens des SE-metallhaltigen Substrats auf Temperatur $T_1$ beim Druck $P_1$ an einem Ort L1; einen Schritt des Erhitzens der Abscheidungsvorrichtung auf Temperatur $T_2$ beim Druck $P_2$ an einer Abscheidezone L2; einen Schritt des Heranführens des Transportmittels an das gemäß eines Schrittes des Erhitzens des SE-metallhaltigen Substrats auf Temperatur $T_1$ beim Druck $P_1$ an einem Ort L1 behandelte Substrat, so dass das Transportmittel mit dem Substrat in Kontakt tritt und zu der gasförmigen Verbindung oder unter Zusatz von Aluminiumhalogenid (Chlorid, Bromid oder Jodid passend zum eingesetzten Transportmittel) zu einem Gasphasenkomplex reagiert; einen Schritt des Heranführens der gasförmigen Verbindung oder des Gasphasenkomplexes an die gemäß eines Schrittes des Erhitzens der Abscheidungsvorrichtung auf Temperatur $T_2$ beim Druck $P_2$ an einer Abscheidezone L2 vorbehandelte Abscheidungsvorrichtung, so dass die gasförmige Verbindung an der Abscheidungsvorrichtung in Kontakt tritt und in (i) das elementare SE-Metall oder eine intermetallische Phase enthaltend das SE-Metall und (ii) das Transportmittel oder eine andere Verbindung zerfällt.

In einem Schritt des chemischen Transportierens der gasförmigen Verbindung und/oder des Gasphasenkomplexes entlang eines ersten Kanals in einem Temperatur- und/oder Druckgradienten von der Ladezone L1 zur Abscheidezone L2, nach dem Verfahren nach der vorliegenden Erfindung ist es bevorzugt, dass ein Gasteilchen und/oder Gaskomplex nur aufgrund der Partialdruckdifferenz zur Senkenseite wandert.

In einer bevorzugten Ausführungsform des erfindungsgemäßen Verfahrens erfolgt ein Heranführen der gasförmigen Verbindung und/oder eines Gasphasenkomplexes an die Abscheidungsvorrichtung durch einen Transportmechanismus, der ausgewählt ist aus Diffusion, thermische Konvektion und Strömung, bevorzugterweise durch Diffusion.

In einer weiteren bevorzugten Ausführungsform des Verfahrens nach der vorliegenden Erfindung ist das Verfahren ein kontinuierlich betriebenes Verfahren, wobei bevorzugterweise das aus der gasförmigen Verbindung entstehende bzw. in der Senkenseite rückgewonnene Transportmittel erneut an das Substrat herangeführt wird. Dies ist von besonderem Vorteil, da das Transportmittel wiederverwendet werden kann.

In einer besonders bevorzugten Ausführungsform des erfindungsgemäßen Verfahrens umfasst das Verfahren, insbesondere ein Schritt (a) weiter einen Schritt des Bereitstellens eines Transportmittels, wobei das Transportmittel geeignet ist, bei der Temperatur $T_1$ und einem Druck $P_1$ mit dem SE-Metall zu einer gasförmigen Verbindung zu reagieren, und wahlweise, Bereitstellen von festem Aluminiumhalogenid des Chlors, Broms oder Jods, welches bei der Temperatur $T_1$ und dem Druck $P_1$ gasförmig ist und geeignet ist, mit der gasförmigen Verbindung zu Gasphasenkomplexen zu reagieren.

In einer besonders bevorzugten Ausführungsform des erfindungsgemäßen Verfahrens umfasst das Verfahren, insbesondere ein Schritt (a) weiter einen Schritt (a') des Herstellens des Druckes $P_1$ in der beheizbaren Ladezone L1 und Erhitzen des SE-metallhaltigen Substrats auf die Temperatur $T_1$ bei dem Druck $P_1$ in der beheizbaren Ladezone L1; und/oder das Verfahren, insbesondere Schritt (b) umfasst weiter einen Schritt (b') des Herstellens des Druckes $P_2$ in der beheizbaren Abscheidezone L2 und Erhitzen der Abscheidungsvorrichtung auf die Temperatur $T_2$ bei dem Druck $P_2$ in der beheizbaren Abscheidezone L2. In diesem Zusammenhang soll verstanden werden, dass es vorteilhaft ist, einen Ofen zunächst vorzuheizen und dann zu beladen.

In einer besonders bevorzugten Ausführungsform des erfindungsgemäßen Verfahrens umfasst das Verfahren, insbesondere ein Schritt (c) weiter einen Schritt (c') des Kontaktierens und Reagierens des Transportmittels, und wahlweise des festen Aluminiumhalogenids, mit dem gemäß Schritt (a) und/oder (a') behandelten Substrats, so dass das Transportmittel mit dem Substrat zu einer gasförmigen Verbindung und/oder zu einem Gasphasenkomplex reagiert; und/oder (c") Kontaktieren einer gasförmigen Verbindung oder eines Gasphasenkomplexes mit der gemäß Schritt (b) und/oder (b') vorbehandelte Abscheidungsvorrichtung, wobei die gasförmige Verbindung an der Abscheidungsvorrichtung in das elementare SE-Metall oder eine intermetallische Phase enthaltend das SE-Metall oder Borid des SE-Metalls oder Nitride des SE-Metalls und das Transportmittel oder eine andere Verbindung zerfällt; und wahlweise einen Schritt (d) des Trennens des SE-Metalls von der Abscheidungsvorrichtung.

In einer bevorzugten Ausführungsform der vorliegenden Erfindung umfasst eine erfindungsgemäße Apparatur weiter (d) einen zweiten Kanal zur Ermöglichung eines Gasflusses von der Abscheidezone L2 zur Ladezone L1; wobei der erste und der zweite Kanal und ggf. weitere Komponenten gemeinsam ein Kreislaufsystem bilden, das einen zirkulierenden Gasfluss ermöglicht.

In einer bevorzugten Ausführungsform der vorliegenden Erfindung umfasst ein erfindungsgemäßes Verfahren weiter einen Schritt des Rückleitens eines das Transportmittel umfassenden Gasflusses von der Abscheidezone L2 zur Ladezone L1 durch einen zweiten Kanal, wobei der erste und der zweite Kanal und ggf. weitere Komponenten gemeinsam ein Kreislaufsystem bilden, das ein Zirkulieren eines Gasflusses ermöglicht. Es soll verstanden werden, dass ein zweiter Kanal ein Kreislaufsystem bildet, welches einen zirkulierenden Gasfluss ermöglicht und insbesondere das in der Abscheidezone L2 zurückgewonnene Transportmittel zurück in die Ladezone L1 führen kann, so dass dieses dort wiederum mit dem Substrat reagieren kann. Es soll jedoch auch verstanden werden, dass insbesondere in einem geschlossenen System ein erfindungsgemäße Apparatur einen solchen zweiten Kanal nicht umfasst, da ein reiner chemischer Transport nur durch Diffusion innerhalb eines Gradienten unterschiedlicher Partialdrücke, insbesondere zwischen Ladezone L1 und Abscheidezone L2 erfolgt und bevorzugterweise bedingt ist durch unterschiedliche Löslichkeiten in L1 und L2, so dass ein in L2 rückgewonnenes Transportmittel unmittelbar durch Diffusion in einem ersten Kanal zurück in die Ladezone L1 wandern kann.

In einer besonders bevorzugten Ausführungsform der vorliegenden Erfindung umfasst eine erfindungsgemäße Apparatur weiter (e) eine Pumpe zur Erzeugung des zirkulierenden Gasflusses mit Hilfe eines Inertgases wie z.B. Stickstoff oder Argon in dem Kreislaufsystem.

In einer bevorzugten Ausführungsform der vorliegenden Erfindung umfasst ein erfindungsgemäßes Verfahren weiter einen Schritt des Pumpens mittels einer Pumpe zur Erzeugung eines zirkulierenden Gasflusses mit Hilfe eines Inertgases wie z.B. Stickstoff oder Argon in dem Kreislaufsystem.

In einer bevorzugten Ausführungsform der vorliegenden Erfindung, insbesondere der Apparatur zur Rückgewinnung eines SE-Metalls aus einem SE-metallhaltigen Substrat durch chemischen Transport nach der vorliegenden Erfindung, umfasst eine Apparatur nach der vorliegenden Erfindung einen hermetisch verschließbaren Reaktor und weiter wenigstens: (a) eine beheizbare Ladezone L1 zur Aufnahme des SE-metallhaltigen Substrats; (b) eine beheizbare Abscheidezone L2 mit einer Abscheidungsvorrichtung; (c) einen ersten Kanal zur Ermöglichung eines Gasflusses von der Ladezone L1 zur Abscheidezone L2; (d) bevorzugterweise einen zweiten Kanal zur Ermöglichung eines Gasflusses von der Abscheidezone L2 zur Ladezone L1; wobei der erste und der zweite Kanal und ggf. weitere Komponenten gemeinsam ein Kreislaufsystem bilden, das einen zirkulierenden Gasfluss ermöglicht; und/oder (e) eine Pumpe zur Erzeugung des zirkulierenden Gasflusses mit Hilfe eines Inertgases wie z.B. Stickstoff oder Argon in dem Kreislaufsystem. Je nachdem, ob weitere SE-Metalle in einem Arbeitsprozess abgeschieden werden sollen, kann die Senke noch erweitert werden. Wenn z.B. ein SE-Metall sich bereits bei einer niedrigeren Senkentemperatur $T_2$ z.B. 900°C abscheidet, kann eine weitere Ofenbaugruppe mit einem entsprechenden Wolfram-Netz noch ergänzt werden, um z.B. SE-Metalle oder intermetallische Phasen oder Boride und Nitride mit höherer Abscheidungstemperatur z.B. 1000°C oder 1100°C in einem Arbeitsprozess abzuscheiden.

In einer besonders bevorzugten Ausführungsform der vorliegenden Erfindung ist die erfindungsgemäße Apparatur und/oder das erfindungsgemäße Verfahren geeignet zur Rückgewinnung wenigstens eines weiteren SE-Metalls, wobei die Abscheidezone L2 bevorzugterweise wenigstens eine weitere Abscheidungsvorrichtung zum Abscheiden wenigstens eines weiteren SE-Metalls bei einer Abscheidungstemperatur $T_2'$ und einem Druck $P_2'$ umfasst und, wobei bevorzugterweise $T_2'$ größer $T_2$ ist. Bevorzugterweise umfasst eine Apparatur gemäß der vorliegenden Erfindung eine, zwei, drei, bevorzugterweise vier weitere Abscheidungsvorrichtungen. Im Zusammenhang mit der vorliegenden Erfindung soll verstanden werden, dass die Abscheidezone L2 wenigstens eine Abscheidungsvorrichtung zum Abscheiden wenigstens eines SE-Metalls bei einer Abscheidungstemperatur $T_2$ umfasst. Eine weitere Abscheidungsvorrichtung bei einer Abscheidungstemperatur $T_2'$ und einem Druck $P_2'$ betrieben wird, wobei bevorzugterweise $T_2'$ größer $T_2$ ist, bevorzugterweise eine noch weitere Abscheidungsvorrichtung bei einer Abscheidungstemperatur $T_2''$ und einem Druck $P_2''$ betrieben wird, wobei $T_2''$ größer $T_2'$ ist. Somit wird verstanden werden, dass eine jede weitere Abscheidungsvorrichtung bei einer Abscheidungstemperatur betrieben wird, die jeweils höher ist als die der vorangehenden Abscheidungsvorrichtung. Es wird von einem Fachmann jedoch unmittelbar verstanden werden, dass an einer jeden Abscheidungsvorrichtung nicht nur ein einzelnes SE-Metall abgeschieden werden kann, sondern auch mehr als ein SE-Metall und/oder ein oder mehrere nicht SE-Metalle abgeschieden werden können. Somit erlaubt das Bereitstellen mehrerer Abscheidungsvorrichtungen das Abscheiden mehrerer Metallfraktionen bei jeweils unterschiedlichen Abscheidungstemperaturen.

In einer bevorzugten Ausführungsform eines Verfahrens nach der vorliegenden Erfindung umfasst ein Verfahren nach der vorliegenden Erfindung einen Schritt (d) des Trennens des SE-Metalls von der Abscheidungsvorrichtung und bevorzugterweise einen Schritt (i) des Trennens des SE-Metalls von der Abscheidungsvorrichtung durch mechanisches Ablösen und/oder ein Trennen durch Erhitzen, bevorzugterweise ein Erhitzen bis zum jeweiligen Schmelzpunkt des abgeschiedenen SE-Metalls oder nicht SE-Metalls welches ebenfalls aus dem Substrat rückgewonnen werden soll. Es soll in diesem Zusammenhang verstanden werden, dass ein Trennen durch Erhitzen, bevorzugterweise, ein Erhitzen der Abscheidungsvorrichtung umfasst.

Es soll verstanden werden, dass die Trennung der SE-Metalle von der Abscheidungsvorrichtung bspw. entweder durch Erhitzen im Vakuum und Verdampfen der SE-Metalle von der Abscheidungsvorrichtung hin zur kälteren Quellenseite ohne Transportmittel oder in einer separaten Anlage unter Vakuum ebenfalls durch Verdampfen erfolgen kann. An einer einzelnen Abscheidungsvorrichtung abgeschiedene SE-Metalle und/oder nicht SE-Metalle, hierin als Metallfraktion bezeichnet, können dabei durch Erhitzen der Abscheidungsvorrichtung anhand ihres unterschiedlichen Schmelzpunktes getrennt werden. Es ist dabei bevorzugt, dass eine Abscheidungsvorrichtung leicht aus der Apparatur nach der vorliegenden Erfindung entnommen werden kann.

In einer besonders bevorzugten Ausführungsform der vorliegenden Erfindung umfasst die Abscheidezone L2 wenigstens eine Aufnahmevorrichtung zur Aufnahme von, bevorzugterweise geschmolzenem, SE-Metall und/oder einer intermetallischen Phase des SE-Metalls, wobei die Aufnahmevorrichtung bevorzugterweise unterhalb der Abscheidungsvorrichtung positioniert ist, und wobei die Aufnahmevorrichtung, bevorzugterweise als Vertiefung und/oder Gefäß ausgebildet ist.

Im Falle der Abscheidung von SE-Metallen kann die Temperatur der Abscheidungsvorrichtung über den Schmelzpunkt des SE-Metalls erwärmt werden, sodass sich das SE-Metall flüssig in einer als Vertiefung im Senken-Bereich, bzw. Senkenseite, ausgestalteten Aufnahmevorrichtung sammeln kann. Die Aufnahmevorrichtung kann dabei vorteilhaft eine Auffangschale enthalten, so dass das SE-Metall und/oder die intermetallischen Phase des SE-Metalls nach Erkalten aus der Auffangschale entnommen werden kann. So kann vorteilhaft anhand des unterschiedlichen Schmelzpunktes ein einzelnes an der Abscheidungsvorrichtung abgeschiedenes SE-Metall oder eine intermetallische Phase des SE-Metalls von weiteren an der Abscheidungsvorrichtung abgeschiedenen SE-Metallen und/oder intermetallischen Phasen des SE-Metalls und/oder nicht SE-Metallen getrennt werden.

In einer bevorzugten Ausführungsform der Apparatur nach der vorliegenden Erfindung enthält die Apparatur eine Aufnahmevorrichtung in Form einer Vertiefung und/oder ein Gefäß zur Aufnahme von geschmolzenem SE-Metall oder geschmolzener intermetallischer Phase, wobei die Vertiefung oder das Gefäß unterhalb der Abscheidungsvorrichtung positioniert ist.

In einer bevorzugten Ausführungsform der vorliegenden Erfindung umfasst ein Verfahren einen Schritt des Aufnehmens von, bevorzugterweise geschmolzenem, SE-Metall und/oder einer intermetallischen Phase des SE-Metalls, mittels einer, bevorzugterweise in der Abscheidezone L2 angeordneten wenigstens einen Aufnahmevorrichtung, wobei die wenigstens eine Aufnahmevorrichtung, bevorzugterweise unterhalb der Abscheidungsvorrichtung positioniert ist, und wobei die wenigstens eine Aufnahmevorrichtung, bevorzugterweise als Vertiefung und/oder Gefäß ausgebildet ist. Bevorzugterweise ist eine Aufnahmevorrichtung so gestaltet, dass sie einfach aus der Apparatur nach der vorliegenden Erfindung entfernt werden kann, um das darin aufgefangene Metall zu entnehmen.

Es soll verstanden werden, dass eine erfindungsgemäße Apparatur bevorzugterweise so gestaltet ist, dass diese während der Durchführung des erfindungsgemäßen Verfahren ein geschlossenes System bildet. Es soll jedoch auch verstanden werden, dass vor und/oder nach Durchführung des erfindungsgemäßen Verfahrens eine erfindungsgemäße Apparatur zur Beschickung der Ladezone L1 mit dem Substrat und/oder zur Entnahme einer Abscheidungsvorrichtung und/oder einer Aufnahmevorrichtung geöffnet und wieder verschlossen werden kann.

Insbesondere dann, wenn das ein wenigstens ein interessierendes SE-Metall aufweisende Substrat wenigstens ein weiteres interessierendes SE-Metall und/oder wenigstens ein interessierendes nicht SE-Metall aufweist, also bspw. im Falle eines SE-Metallgemisches im Ausgangsbodenkörper bzw. Substrat, kann, bevorzugterweise mit unterschiedlichen Abscheidungstemperaturen an, bevorzugterweise unterschiedlichen Abscheidungsvorrichtungen, bspw. indem der Senken-Bereich, bzw. Senkenseite um ein weiteres Wolfram-Netz erweitert wird, auch das wenigstens eine weitere interessierende SE-Metall und/oder das wenigstens eine interessierende nicht SE-Metall zurückgewonnen werden. Dies ist besonders vorteilhaft indem eine Trennung der einzelnen SE-Metalle, die wegen der Ähnlichkeit der SE-Metalle bisher schwierig war, mit dem erfindungsgemäßen Verfahren und/oder der erfindungsgemäßen Apparatur auf relativ einfache Weise möglich wird.

Dies ist möglich indem das wenigstens eine interessierende SE-Metall und das wenigstens eine weitere interessierende SE-Metall und/oder das wenigstens eine interessierende nicht SE-Metall an derselben Abscheidungsvorrichtung abgeschieden werden und anschließend bspw. anhand ihres Schmelzpunktes getrennt werden, und/oder indem das wenigstens eine interessierende SE-Metall und das wenigstens eine weitere interessierende SE-Metall und/oder das wenigstens eine interessierende Nicht-SE-Metall an wenigstens zwei unterschiedlichen Abscheidungsvorrichtungen abgeschieden werden.

Bevorzugterweise ist die wenigstens eine weitere Abscheidungsvorrichtung in Bezug auf die Anordnung der Quelle bzw. Ladezone L1 in der Abscheidezone L2 hinter einer ersten Abscheidungsvorrichtung und ggf. vor einer jeweils weiteren Abscheidungsvorrichtung angeordnet. An einer solchen wenigstens eine weitere Abscheidungsvorrichtung wird ein Abscheiden des wenigstens einen weiteren SE-Metalls bei einer Abscheidungstemperatur $T_2'$ erfolgen, wobei bevorzugterweise $T_2'$ größer $T_2$ ist, bevorzugterweise $T_2'$ um etwa 50 °C bis etwa 100°C größer ist als $T_2$. Es soll verstanden werden, dass jede weitere Abscheidungsvorrichtungen zu der unmittelbar vor dieser weiteren Abscheidungsvorrichtung angeordneten Abscheidungsvorrichtung bei einer Abscheidungstemperatur betrieben wird, die um etwa 50 °C bis etwa 100°C größer ist, als die unmittelbar vor dieser weiteren Abscheidungsvorrichtung angeordneten Abscheidungsvorrichtung. Mit anderen Worten, können mehrere, bevorzugterweise bis zu fünf Abscheidungsvorrichtungen, bspw. Wolfram-Netze zu einander beabstandet und mit einem Unterschied in den gewählten Abscheidungstemperaturen von etwa 50° bis etwa 100°C angeordnet sein, wobei die Abscheidungstemperaturen mit zunehmendem Abstand zur Quellenseite bzw. Ladezone L1 zunehmen.

Es soll verstanden werden, dass so das erfindungsgemäße Verfahren, bzw. die erfindungsgemäße Apparatur zur Rückgewinnung wenigstens eines weiteren SE-Metalls verwendet werden kann, indem bevorzugterweise, die Abscheidezone L2 wenigstens eine weitere Aufnahmevorrichtung umfasst, um das wenigstens eine weitere Selten-Erd-Metall, bevorzugterweise flüssig, darin aufzufangen.

In einer besonders bevorzugten Ausführungsform der vorliegenden Erfindung, insbesondere der erfindungsgemäßen Apparatur und/oder des erfindungsgemäßen Verfahrens ist die Abscheidungsvorrichtung mit einem metallischen Material beschichtet und/oder aus einem metallischen Material gebildet, das ausgewählt ist aus der Gruppe umfassend Wolfram und Wolfram-Legierungen.

In einer besonders bevorzugten Ausführungsform der vorliegenden Erfindung, insbesondere der erfindungsgemäßen Apparatur und/oder des erfindungsgemäßen Verfahrens ist das Selten-Erd-Metall ausgewählt aus der Gruppe der Seltenen Erdmetalle umfassend Neodym (Nd), Samarium (Sm), Dysprosium (Dy) und Praseodym (Pr).

In einer besonders bevorzugten Ausführungsform der Apparatur und/oder des Verfahrens nach der vorliegenden Erfindung ist das Transportmittel bei $T_1$ und $P_1$ gasförmig und mit dem SE-Metall zu einer gasförmigen Verbindung, einem Halogenid oder Oxidhalogenid des Chlors, Broms oder Jods, bevorzugterweise bei geringfügiger Beteiligung von Sauerstoff, reagierbar.

In einer besonders bevorzugten Ausführungsform der Apparatur und/oder des Verfahrens nach der vorliegenden Erfindung ist ein/der erste Kanal als Diffusionsstrecke zum chemischen Transport des wenigstens einen SE-Metalls mittels eines Transportmittels in einem Temperaturgradienten ausgebildet.

In einer besonders bevorzugten Ausführungsform der Apparatur und/oder des Verfahrens nach der vorliegenden Erfindung enthält das wenigstens eine SE-Metall aufweisende Substrat das SE-Metall als Metall und/oder intermetallischen Phase.

In einer besonders bevorzugten Ausführungsform der Apparatur und/oder des Verfahrens nach der vorliegenden Erfindung umfasst das wenigstens eine SE-Metall aufweisende Substrat Elektronikschrott, insbesondere isolierte SE-haltige Elektromagnete. Besonders bevorzugt liegt der Elektronikschrott in zerkleinerter Form, insbesondere als Granulat vor. Dabei wird der Fachmann unmittelbar erkennen, dass mit dem erfindungsgemäßen Verfahren und/oder der erfindungsgemäßen Apparatur besonders vorteilhaft die Rückgewinnung des wenigstens einen SE-Metalls aus Elektronikschrott ermöglicht wird. Elektronikschrott, wie hierin verwendet umfasst bevorzugt verschiedene Elektro- und Elektronikgeräte oder deren Bauteile, oder Teile davon, die nicht mehr verwendet werden, da sie entweder ihre vorgesehene Aufgabe nicht mehr erfüllen oder durch bessere Geräte ersetzt wurden.

Elektronikschrott kann in unterschiedliche Kategorien eingeordnet werden, bspw. in Haushaltsgroßgeräte (sogenannte weiße Ware), wie Waschmaschinen, Kühlschränke, Elektroherde; Haushaltskleingeräte, wie Staubsauger, Wasserkocher, Kaffeemaschinen, elektrische Zahnbürsten; Informations-(IT-) und Kommunikationstechnik-Geräte, wie Computer, Laptops, Monitore, Drucker, Druckerpatronen, Smartphones, Telefone, Handys, Tablet-PCs; Unterhaltungselektronik-Geräte (sogenannte braune Ware), wie Fernseher, DVD-Player, MP3-Player, Spielkonsolen, Fotoapparat, aber auch Elektrokabel; oder Beleuchtungskörper, wie Lampen, Leuchtmittel, Leuchtstoffröhren, Energiesparlampen, insbesondere sämtliche Materialien in denen kleine SE- haltige Elektromagnete zum Einsatz kommen. Es soll verstanden werden, dass sich das Verfahren und die Apparatur nach der vorliegenden Erfindung grundsätzlich zur Rückgewinnung von SE-Metallen aus alle Arten Elektronikschrott eignet. Bevorzugt umfasst Elektronikschrott, wie hierin verwendet insbesondere Computer, Festplatten, Handys und andere Permanentmagnete-enthaltende Altgeräte. Es soll auch verstanden werden, dass das wenigstens eine SE-Metall aufweisende Substrat, insbesondere Elektronikschrott, SE-Metalle als Reinmetalle und/oder in Form von Verbindungen der Form $SE_xMe_yB_z$ aufweist, wobei SE ausgewählt ist aus der Gruppe der SE-Metalle umfassend La, Ce, Pr, Nd, Pm, Sm, Eu, Gd, Tb, Dy, Ho, Er, Tm und Yb, und wobei Me ausgewählt ist aus Sc, Ti, V, Cr, Mn, Fe, Co, Ni, Cu, Y, Zr, Nb, Mo, Tc, Ru, Rh, Hf, Ta, W, Re, Os und Ir, und wobei x>0,y>0,z>0.

Das erfindungsgemäße Verfahren umfasst in einer bevorzugten Ausführungsform ein Schritt des Zerkleinerns von Elektronikschrott. Dabei kennt der Fachmann verschiedene Möglichkeiten Elektronikschrott vorteilhaft zu zerkleinern und/oder ein Elektronikschrott-Granulat zu erzeugen. Bspw. kann unter Einsatz von Sieben, bspw. Rüttelsieben, Mühlen, bspw. Prallmühlen, und/oder weiteren Vorsortierverfahren, bspw. ein Magnetsortierverfahren, oder Granulieren, Elektronikschrott für das Verfahren nach der vorliegenden Erfindung vorteilhaft vorbereitet werden. Es soll verstanden werden, dass eine Apparatur nach der vorliegenden Erfindung eine solche dem eigentlichen Ofen vorgeschaltete Apparatur, wie bspw. ein Sieb, eine Mühle, eine Sortiervorrichtung umfasst.

Es soll in diesem Zusammenhang verstanden werden, dass das Verfahren und die Apparatur nach der vorliegenden Erfindung besonders zum Recycling, bzw. der Rückgewinnung von SE-Metallen insbesondere von Neodym (Nd), Samarium (Sm), Dysprosium (Dy) und Praseodym (Pr) aus einem Granulat, welches aus Elektronikschrott insbesondere Festplatten, Handys und andere Permanentmagnete-enthaltende Altgeräte gewonnen wird, geeignet ist.

In einer bevorzugten Ausführungsform der vorliegenden Erfindung wird dem das wenigstens eine SE-Metall enthaltenden Substrat, bzw. Ausgangskörper, bis zu 50 % Co zugesetzt, um die Disproportionierungsreaktion im Falle der abzuscheidenden Boride $Nd_2Fe_{14}B$ im Senken-Bereich, bzw. Senkenseite zu unterdrücken und die magnetischen Eigenschaften wie die Remanenz zu steigern. Dies ist insbesondere dann vorteilhaft wenn noch stärkere Permanentmagnete mit höherer Koerzitivkraft und höherer Curie-Temperatur erzielt werden sollen.

Bevorzugterweise umfasst ein Verfahren nach der vorliegenden Erfindung einen Schritt des Dotierens, insbesondere mit einem die Magneteigenschaften verbessernden Material, das ausgewählt ist aus der Gruppe umfassend Kobalt.

In einer besonders bevorzugten Ausführungsform der vorliegenden Erfindung, insbesondere der erfindungsgemäßen Apparatur und/oder des erfindungsgemäßen Verfahrens liegt das wenigstens eine SE-Metall in dem das wenigstens eine SE-Metall aufweisenden Substrat in elementarer Form, als Legierung und/oder als, bevorzugterweise magnetische Eigenschaften aufweisende, intermetallische Phase vor.

Es soll verstanden werden, dass das rückzugewinnende SE-Metall in verschiedenen Formen in dem das wenigstens eine SE-Metall aufweisenden Substrat vorliegen kann. Bevorzugterweise besitzt eine intermetallische Phase, wie hierin verwendet, magnetische Eigenschaften. Bevorzugterweise, besitzt eine intermetallische Phase, wie hierin verwendet, auch nach Durchführung des Verfahrens nach der vorliegenden Erfindung magnetische Eigenschaften.

Die Erfinder haben erkannt, dass die reine Abscheidung von $SECo_5$ oder $SE_2Me_{17}$ oder $SE_2Me_{14}B$ oder $Sm_{22}Fe_{18}N_3$ nach dem Verfahren nach der vorliegenden Erfindung ohne Einbußen der magnetischen Eigenschaften erfolgen kann, sodass diese vorteilhafterweise wieder direkt als Ausgangsstoff für neue Permanentmagnete eingesetzt werden können.

In einer besonders bevorzugten Ausführungsform der Apparatur und/oder des Verfahrens nach der vorliegenden Erfindung wird das wenigstens eine SE-Metall in elementarer Form oder in der Form einer Verbindung rückgewonnen, wobei die Verbindung bevorzugterweise ausgewählt ist aus der Gruppe umfassend intermetallische Phasen, Borid und Nitrid.

Es soll in diesem Zusammenhang verstanden werden, dass wenn die Abscheidungstemperatur auf der Senkenseite höher als auf der Quellenseite gewählt wird, die Abscheidung von SE-Halogeniden beim Transport von heiß nach kalt vermieden wird, welches die zusätzliche Reduktion zur Gewinnung der reinen SE-Metallen notwendig machen würde.

In einer besonders bevorzugten Ausführungsform der vorliegenden Erfindung, insbesondere der erfindungsgemäßen Apparatur und/oder des erfindungsgemäßen Verfahrens ist die Abscheidungstemperatur $T_2$ im Bereich von etwa 400°C bis etwa 1200°C. Dabei soll verstanden werden, dass eine Temperatur $T_2$ bevorzugterweise unterhalb des Schmelzpunktes des interessierenden SE-Metalls und/oder der das SE-Metall enthaltenden Verbindung liegt.

In einer bevorzugten Ausführungsform der Apparatur nach der vorliegenden Erfindung ist die Abscheidezone L2 auf eine Temperatur im Bereich von 400 °C und 1200 °C beheizbar.

Bevorzugterweise liegt die Abscheidungstemperatur $T_2$ im Vergleich zur Quelle $T_1$ mit dem Ausgangsbodenkörper bzw. Substrat und in Abhängigkeit des gewählten Transportmittels im Bereich 400°C -1200°C.

In einer besonders bevorzugten Ausführungsform der vorliegenden Erfindung, insbesondere der erfindungsgemäßen Apparatur und/oder des erfindungsgemäßen Verfahrens ist die Temperatur $T_1$ im Bereich von etwa 300 °C bis etwa 1100 °C.

In einer bevorzugten Ausführungsform der Apparatur nach der vorliegenden Erfindung ist die Ladezone L1 auf eine Temperatur im Bereich von 100 °C und 1100 °C beheizbar.

In einer besonders bevorzugten Ausführungsform der Apparatur und/oder des Verfahrens nach der vorliegenden Erfindung ist die Abscheidungstemperatur $T_2$ kleiner gewählt als der Schmelzpunkt des wenigstens einen SE-Metalls und/oder kleiner als die Zersetzungstemperatur der intermetallischen Phasen.

Bevorzugterweise liegt die Abscheidungstemperatur unterhalb der Schmelzpunkte der SE-Metalle, bzw. unterhalb der Zersetzungstemperaturen der intermetallischen Phasen $SECo_5$ oder $SE_2Me_{17}$ bzw. der Boride und Nitride $SE_2Me_{14}B$ oder $Sm_{22}Fe_{18}N_3$.

In einer besonders bevorzugten Ausführungsform der vorliegenden Erfindung, insbesondere der erfindungsgemäßen Apparatur und/oder des erfindungsgemäßen Verfahrens ist die Abscheidungsvorrichtung als, bevorzugterweise gemäß einer laminaren Strömung geformtes, Sieb, Netz, Lochplatte, Filter oder Röhrensystem ausgebildet, wobei bevorzugterweise eine Loch oder Maschenweite im Bereich von etwa 0,1 mm bis etwa 2 mm gewählt ist.

Aufgrund der geringeren Löslichkeit der SE-Metalle auf der heißeren Senkenseite erfolgt die Abscheidung von SE-Metallen bevorzugterweise an einem beheizbaren Wolfram-(W)-Netz, bevorzugterweise, mit einer Maschenweite von 0,1 mm - 2 mm.

Es soll in diesem Zusammenhang verstanden werden, dass auch andere Maschenweiten zum Einsatz kommen können und ein Fachmann eine geeignete Maschenweite nach den Gegebenheiten des konkreten Verfahrens auswählen kann. Im Allgemeinen jedoch ist eine eher kleiner gewählte, d.h. engmaschigere Maschenweite, insbesondere eine Maschenweite von etwa 0,1 mm bis etwa 2 mm von Vorteil, da dann wahrscheinlicher ist, dass im Strom vorbeigeführte gasförmige Halogenide oder Gasphasenkomplexe damit in Reaktion treten.

In einer besonders bevorzugten Ausführungsform der Apparatur und/oder des Verfahrens nach der vorliegenden Erfindung ist die Abscheidungsvorrichtung mit einem metallischen Material beschichtet und/oder aus einem metallischen Material gebildet, das einen Schmelzpunkt von mindestens 2000 °C aufweist, wobei, bevorzugterweise, das metallische Material ausgewählt ist aus der Gruppe umfassend Wolfram und Wolfram-Legierungen.

Bevorzugterweise ist die Abscheidungsvorrichtung aus einem metallischen Material mit einem Schmelzpunkt von mindestens 2000 °C, insbesondere aus Wolfram oder einer Wolfram-haltigen Legierung gebildet.

Es wird unmittelbar verstanden werden, dass im Zusammenhang mit dem erfindungsgemäßen Verfahren und/oder der erfindungsgemäßen Apparatur eine Abscheidungsvorrichtung aus Wolfram vorteilhaft ist, indem Wolfram von allen reinen Metallen den höchsten Schmelzpunkt, nämlich 3695 K, entsprechend 3422 °C besitzt.

Es soll jedoch auch verstanden werden, dass andere Materialien neben Wolfram von einem Fachmann ausgewählt werden können, ohne den Rahmen der Erfindung zu verlassen. Dabei wird der Fachmann jedoch erkennen, dass ein hoher Schmelzpunkt von Vorteil ist und bspw. ein im Stand der Technik bekannter Graphitkörper im erfindungsgemäßen Verfahren oder der erfindungsgemäßen Apparatur von Nachteil ist. Dies ist der Fall, da Graphit mit Sauerstoff bereits bei etwa 700 °C zu Kohlendioxid reagiert, wodurch bei den im erfindungsgemäßen Verfahren üblicherweise beabsichtigten Transporttemperaturen eine Abscheidungsvorrichtung aus Graphit, bspw. ein Graphitring, bereits angegriffen werden würde. Es soll dabei auch verstanden werden, dass insbesondere bei recyceltem Material die Anwesenheit von in Form oxidischem Materials und damit die Gegenwart gebundenen Sauerstoffs nie ganz ausgeschlossen werden kann. Bevorzugt ist im Zusammenhang mit dem erfindungsgemäßen Verfahren und/oder der erfindungsgemäßen Vorrichtung, dass das Substrat im Wesentlichen frei von Oxiden und/oder Erzen ist. In diesem Zusammenhang wird unmittelbar verstanden werden, dass sich oxidisches Material nur im Temperaturgefälle von heiß nach kalt von T2 nach T1 transportieren lässt. Um dem erfindungsgemäßen Verfahren Rechnung zu tragen, ist es bevorzugt das Ausgangssubstrat weitgehend Sauerstoff-frei zur Verfügung zu stellen. Der im Substrat vorhandene Sauerstoff-Anteil, der als Oxid bzw. Erz gebunden ist, verbleibt vorteilhafterweise beim Transport von T1 nach T2 in der Ladezone und wird nicht zur heißeren Seite transportiert.

Bevorzugterweise ist die Abscheidungsvorrichtung als ein Sieb, ein Netz, eine Lochplatte, ein Filter oder ein mit Wolfram oder Wolfram enthaltender Legierung beschichtetes Röhrensystem, ausgebildet.

Damit erlaubt die vorliegende Erfindung eine relativ einfache Abscheidung, insbesondere im Vergleich mit im Stand der Technik bekannten Verfahren und Vorrichtungen, bei denen die Abscheidung des Metalls an einer Innenseite relativ großflächig und ungerichtet, insbesondere an einer kompletten Innenseite des Abscheidungsraumes, erfolgt. Insbesondere bei im Stand der Technik bekannten Verfahren, bei denen sich Metalle als dünner Film in der Abscheidezone abscheiden ist nämlich eine Rückgewinnung in einem weiteren Aufschmelzprozess sehr schwierig. Eine derartig gestaltete Abscheidungsvorrichtung nach der vorliegenden Erfindung erlaubt im Gegensatz dazu besonders vorteilhaft eine relativ gezielte Abscheidung an der Abscheidungsvorrichtung. Nach erfolgter Abscheidung erlaubt die erfindungsgemäße Abscheidungsvorrichtung vorteilhaft die Lösung des Metalls von der Abscheidungsvorrichtung, insbesondere einem Abscheidungsnetz, durch Erhitzen über den Schmelzpunkt des Metalls. Besonders bevorzugt ist eine erfindungsgemäße Apparatur derart ausgestaltet, dass die Abscheidungsvorrichtung aus dem Reaktor herausnehmbar ist. Eine Abscheidungsvorrichtung, bspw. in Form eines Abscheidungsnetzes, welches nach erfolgtem chemischen Transport herausnehmbar ist, bietet dabei den Vorteil, mechanisch fein und grob kristalline intermetallische Phasen und Boride mechanisch abzulösen. Ein Abscheidungsnetz begünstigt ferner die Bildung von Kristallisationskeimen an denen ein weiteres Wachstum der intermetallischen Phasen stattfinden kann, womit eine Verteilung über die gesamte Abscheidezone vermieden wird.

Bestandteil einer bevorzugten Ausführungsform der vorliegenden Erfindung ist es, zum Abscheiden der SE-Metalle bzw. deren hierin Verbindungen ein Wolfram-Netz zu verwenden, welches auf die jeweilige Abscheidungstemperatur gebracht werden kann.

Ein solches Wolfram-Netz ist bevorzugterweise gemäß der laminaren Strömung geformt und mit unterschiedlichen Löchern des Durchmessers von etwa 0,1 mm bis etwa 2 mm versehen, sodass das Transportmittel ungehindert durchströmen und dem Quellen- bzw. Ausgangs-Bodenkörper bzw. Substrat wieder zugeführt werden kann.

An einer solchen Abscheidungsvorrichtung, wie bspw. einem Wolframnetz mit Löchern zwischen etwa 0,1 mm bis etwa 2 mm Durchmesser, findet in einem erfindungsgemäßen Verfahren, bevorzugterweise die Zersetzung der das interessierende SE-Metall enthaltenden Gasteilchen oder Gaskomplexe, bspw. der SE-Halogenide oder Oxidhalogenide - bei Beteiligung von Sauerstoff - statt, sodass sich auf der Abscheidungsvorrichtung, also bspw. dem Wolfram-Netz, die SE- Metalle abscheiden, bzw. Kristalle der intermetallischen Phasen oder der Boride bzw. Nitride wachsen.

Die Trennung der SE-Metalle vom Wolfram-Netz erfolgt bevorzugterweise entweder durch Erhitzen im Vakuum und Verdampfen der SE-Metalle vom Wolfram-Netz hin zur kälteren Quellenseite ohne Transportmittel oder in einer separaten Anlage unter Vakuum ebenfalls durch Verdampfen.

Im Falle der Abscheidung von SE-Metallen kann die Temperatur des Wolfram-Netzes über den Schmelzpunkt des SE-Metalls erwärmt werden, sodass sich das SE-Metall flüssig in einer Vertiefung im Senken-Bereich, bzw. Senkenseite sammeln kann und nach Erkalten bzw. Erstarren bspw. aus der Auffangschale entnommen werden kann.

Im Falle der intermetallischen Phasen bzw. der Boride und Nitride wie $SE_2Me_{14}B$ bzw. $Sm_{22}Fe_{18}N_3$ bilden sich, bevorzugterweise, an der Abscheidungsvorrichtung, also bspw. an einem Wolfram Netz, Kristalle, die mechanisch abgelöst werden können.

In einer besonders bevorzugten Ausführungsform der Apparatur und/oder des Verfahrens nach der vorliegenden Erfindung ist das SE-Metall ausgewählt aus der Gruppe der Seltenen Erdmetalle umfassend Neodym (Nd), Samarium (Sm), Dysprosium (Dy) und Praseodym (Pr).

In einer besonders bevorzugten Ausführungsform der Apparatur und/oder des Verfahrens nach der vorliegenden Erfindung ist das wenigstens eine Selten-Erd-Metall ausgewählt aus der Gruppe der Selten-Erdmetallen, insbesondere bestehend aus Neodym (Nd), Samarium (Sm), Dysprosium (Dy) und Praseodym (Pr).

In einer besonders bevorzugten Ausführungsform der Apparatur und/oder des Verfahrens nach der vorliegenden Erfindung weist die intermetallische Phase, eine Zusammensetzung der Formel $SE_xMe_y$ auf, wobei SE ausgewählt ist aus der Gruppe der Seltenen Erdmetalle, umfassend La, Ce, Pr, Nd, Pm, Sm, Eu, Gd, Tb, Dy, Ho, Er, Tm, Yb und Me ausgewählt ist aus Sc, Ti, V, Cr, Mn, Fe, Co, Ni, Cu, Y, Zr, Nb, Mo, Tc, Ru, Rh, Hf, Ta, W, Re, Os, Ir, und wobei x und y, jeweils einzeln und unabhängig >0 gewählt sind.

Beispielsweise, weist die intermetallische Phase, eine Zusammensetzung der Formel $SECo_5$ auf, wobei SE ausgewählt ist aus Sm und Pr, oder die intermetallische Phase weist eine Zusammensetzung der Formel $SE_2Me_{17}$ auf, wobei SE Sm ist und wobei Me ausgewählt ist aus Fe, Cu, Co, Zr und Hf.

Bevorzugterweise weist das Borid eine Zusammensetzung der Formel $SE_xMe_yB_z$ auf, wobei SE ausgewählt ist aus der Gruppe der Seltenen Erdmetalle, umfassend La, Ce, Pr, Nd, Pm, Sm, Eu, Gd, Tb, Dy, Ho, Er, Tm, Yb und Me ausgewählt ist aus Sc, Ti, V, Cr, Mn, Fe, Co, Ni, Cu, Y, Zr, Nb, Mo, Tc, Ru, Rh, Hf, Ta, W, Re, Os, Ir, und wobei x, y und z, jeweils einzeln und unabhängig >0 gewählt sind.

Beispielsweise, weist das Borid eine Zusammensetzung der Formel $SE_2Me_{14}B$ auf, wobei SE ausgewählt ist aus Nd, Pr, und Dy; und Me ausgewählt ist aus Fe und Co oder das Borid weist eine Zusammensetzung der Formel $Nd_2Fe_{14}B$ auf.

Bevorzugterweise, weist das Nitrid eine Zusammensetzung der Formel $SE_xMe_yN_z$ auf, wobei SE ausgewählt ist aus der Gruppe der Seltenen Erdmetalle, umfassend La, Ce, Pr, Nd, Pm, Sm, Eu, Gd, Tb, Dy, Ho, Er, Tm, Yb und Me ausgewählt ist aus Sc, Ti, V, Cr, Mn, Fe, Co, Ni, Cu, Y, Zr, Nb, Mo, Tc, Ru, Rh, Hf, Ta, W, Re, Os, Ir, und wobei x, y und z, jeweils einzeln und unabhängig >0 gewählt sind.

Beispielsweise, weist das Nitrid eine Zusammensetzung der Formel $Sm_2Fe_{18}N_3$ auf.

In einer bevorzugten Ausführungsform des Verfahrens nach der vorliegenden Erfindung besitzt die intermetallische Phase eine der folgenden Zusammensetzung: (a) $SE_2Me_{14}B$; wobei SE ausgewählt ist aus Nd, Pr, und Dy; und Me ausgewählt ist aus Fe und Co; beispielsweise $Nd_2Fe_{14}B$; (b) $SECo_5$; wobei SE ausgewählt ist aus Sm und Pr; (c) $Sm_2Me_{17}$; wobei Me ausgewählt ist aus Fe, Cu, Co, Zr, und Hf; (d) $Sm_2Fe_{18}N_3$; (e) $SE_xMe_yB_z$ wobei SE ausgewählt ist aus der Gruppe der Seltenen Erdmetalle (La, Ce, Pr, Nd, Pm, Sm, Eu, Gd, Tb, Dy, Ho, Er, Tm, Yb und Me ausgewählt ist aus Sc, Ti, V, Cr, Mn, Fe, Co, Ni, Cu, Y, Zr, Nb, Mo, Tc, Ru, Rh, Hf, Ta, W, Re, Os, Ir wobei x>0,y>0,z>0; (f) $SE_xMe_yN_z$ wobei SE ausgewählt ist aus der Gruppe der Seltenen Erdmetalle (La, Ce, Pr, Nd, Pm, Sm, Eu, Gd, Tb, Dy, Ho, Er, Tm, Yb und Me ausgewählt ist aus Sc, Ti, V, Cr, Mn, Fe, Co, Ni, Cu, Y, Zr, Nb, Mo, Tc, Ru, Rh, Hf, Ta, W, Re, Os, Ir wobei x>0,y>0,z>0; oder (g) $SE_xMe_y$ wobei SE ausgewählt ist aus der Gruppe der Seltenen Erdmetalle (La, Ce, Pr, Nd, Pm, Sm, Eu, Gd, Tb, Dy, Ho, Er, Tm, Yb und Me ausgewählt ist aus Sc, Ti, V, Cr, Mn, Fe, Co, Ni, Cu, Y, Zr, Nb, Mo, Tc, Ru, Rh, Hf, Ta, W, Re, Os, Ir wobei x>0,y>0.

Bevorzugterweise umfasst ein magnetisches Granulat das als das interessierende SE-Metall enthaltende Substrat, insbesondere zerkleinerter Elektroschrott eingesetzt wird aus einer intermetallischen Phase folgender Zusammensetzung: $SE_xMe_y$ oder $SE_xMe_yN_z$ oder $SE_xMe_yB_z$, wobei x, y, und z jeweils unabhängig voneinander >0 sind; insbesondere $SE_2Me_{14}B$, wobei SE ausgewählt ist aus Nd,Pr und Dy, und wobei Me ausgewählt ist aus Fe und Co, bspw. $Nd_2Fe_{14}B$; $SECo_5$, wobei SE ausgewählt ist aus Sm und Pr; $SE_2Me_{17}$, wobei SE Sm ist und Me ausgewählt ist aus Fe, Cu, Co, Zr und Hf; oder $Sm_2Fe_{18}N_3$.

Der Transport der SE-Metalle, bzw. der intermetallischen Phasen bzw. der Boride und Nitride kann gemäß der vorliegenden Erfindung mit unterschiedlichen Transportmitteln erfolgen. Mit den Halogenen $X_2$, bevorzugterweise ausgewählt aus Cl, Br, I, als Transportmittel bspw., wird das SE-Metall im Ausgangsbodenkörper bzw. Substrat als Trihalogenid in der Gasphase gelöst und in der Senke in Umkehrung der Bildung wieder abgeschieden. Dabei folgt die Reaktion eines erfindungsgemäßen Verfahrens der Gleichung: SE,s + 3/2 $X_2$,g -> $SEX_3$,g, (Gleichung 1), wobei SE ausgewählt ist aus Nd, Pr, Dy, Sm und X ausgewählt ist aus Cl, Br und I im Temperaturgradienten oberhalb 400 °C.

In der Gasphase stehen die monomeren Trihalogenide mit den Dimeren nach der folgenden Gleichung im Gleichgewicht: 2 $SEX_3$,g -> $SE_2X_6$,g (Gleichung 2), so dass die Lösung des SE-Metalls bei $T_1$ und die Abscheidung der SE-Metalle bei $T_2$ in der Senke auch über die dimeren Gasteilchen erfolgen kann.

In einem Temperaturbereich oberhalb von etwa 400 °C gilt dann die Gleichung: 2 SE,s + 3 $X_2$,g -> $SE_2X_6$,g (Gleichung 3), wobei SE ausgewählt ist aus der Gruppe der SE-Metalle umfassend Nd, Pr, Dy und Sm; und X ausgewählt ist aus Cl, Br und I.

Durch Zusatz von $AlX_3$,s, welches sich als $AlX_3$,g in der Gasphase löst, wobei X ausgewählt ist aus Cl, Br und I, kann in Kombination mit Halogen $X_2$, wobei X ausgewählt ist aus Cl, Br und I ein Gaskomplex $SEAl_2X_9$,g, und $SEAl_3X_{12}$,g wobei SE ausgewählt ist aus der Gruppe der SE-Metalle umfassend Nd, Pr, Dy und Sm; und wobei X ausgewählt ist aus Cl, Br und I gebildet werden, wodurch die Löslichkeit der SE-Metalle in der Gasphase im Vergleich zu den Trihalogeniden und dimeren Gasteilchen deutlich erhöht wird.

Gemäß der folgenden Gleichung dimerisiert $AlX_3$: 2 $AlX_3$,g -> $Al_2X_6$,g (Gleichung 4), so dass das SE-Trihalogenid nach der Gleichung: $SEX_3$,g + $Al_2X_6$,g -> $SEAl_2X_9$,g (Gleichung 5), reagiert, wobei SE ausgewählt ist aus der Gruppe der SE-Metalle umfassend Nd, Pr, Dy und Sm; und X ausgewählt ist aus der Gruppe Cl, Br und I.

Für den Transport von SE,s gilt somit die nachfolgende Gleichung 6: $SE,s + 3/2\ X_2,g + Al_2X_6,g \rightarrow SEAl_2X_9,g$ (Gleichung 6), bzw. $SE,s + 3/2\ X_2,g + 3/2\ Al_2X_6,g \rightarrow SEAl_3X_{12},g$ (Gleichung 6), wobei SE ausgewählt ist aus der Gruppe der SE-Metalle umfassend Nd, Pr, Dy und Sm; und X ausgewählt ist aus der Gruppe Cl, Br und I.

Für den Metalltransport geeignet sind auch die Transportmittel der Hydrogenhalogenide HX,g insbesondere in Form von $NH_4X,g$. Durch die Bildung von $NH_3,g$ auf der Produktseite wird die Löslichkeit des SE-Metalls in der Gasphase erhöht. Der Transport kann über folgende Gleichgewichte verlaufen:

Mit HX,g: $SE,s + 3\ HX,g \rightarrow SEX_3,g + 3/2\ H_2,g$, (Gleichung 7), wobei SE ausgewählt ist aus der Gruppe der SE-Metalle umfassend Nd, Pr, Dy und Sm; und X ausgewählt ist aus der Gruppe Cl, Br und I.

Mit HX,g/AlX$_3$,g: $SE,s + 3\ HX,g + Al_2X_6,g \rightarrow SEAl_2X_9,g + 3/2\ H_2,g$ (Gleichung 8), oder: $SE,s + 3\ HX,g + 3/2\ Al_2X_6,g \rightarrow SEAl_3X_{12},g + 3/2\ H_2,g$, wobei SE ausgewählt ist aus der Gruppe der SE-Metalle umfassend Nd, Pr, Dy und Sm; und X ausgewählt ist aus der Gruppe Cl, Br und I.

Mit NH$_4$X,g/AlX$_3$,g: $SE,s + 3\ NH_4X,g + Al_2X_6,g \rightarrow SEAl_2X_9,g + 3/2\ H_2,g + 3\ NH_3,g$ (Gleichung 9), oder: $SE,s + 3\ NH_4X,g + 3/2\ Al_2X_6,g \rightarrow SEAl_3X_{12},g + 3/2\ H_2,g + 3\ NH_3,g$ (Gleichung 9), wobei SE ausgewählt ist aus der Gruppe der SE-Metalle umfassend Nd, Pr, Dy und Sm; und X ausgewählt ist aus der Gruppe Cl, Br und I.

Ein Fachmann wird unmittelbar erkennen, dass für die intermetallischen Phasen für den Transport von einer Temperatur $T_1$ der Ladezone L1 hin zu einer Temperatur $T_2$ der Abscheidezone L2, wobei $T_2$ größer ist als $T_1$, im Temperaturbereich 400°C - 1200°C die gleichen Transportmittel verwendet werden können.

In einer besonders bevorzugten Ausführungsform der vorliegenden Erfindung, insbesondere der erfindungsgemäßen Apparatur und/oder des erfindungsgemäßen Verfahrens ist das Transportmittel ausgewählt aus der Gruppe umfassend Halogene, Hydrogenhalogenide, Ammoniumhalogeniden und Mischungen derselben, wobei die Halogene/Halogenide Chlor, Brom und Jod umfassen.

Bevorzugterweise werden im Zusammenhang mit der vorliegenden Erfindung als Transportmittel Halogene und Hydrogenhalogenide, insbesondere in Kombination mit Al-Halogeniden zur Bildung löslichkeitssteigernder Gasphasenkomplexe $NdAl_2Cl_9$, $NdAl_3Cl_{12}$ verwendet.

Als Gaskomplexbildner können neben Aluminiumhalogenide, insbesondere solche umfassend Chlor, Brom, und Jod, auch Eisenhalogenide, Kobalthalogenide, Indiumhalogenide, Galliumhalogenide oder auch SE-Halogenide dienen. Es soll verstanden werden, dass Al-Halogenide bevorzugterweise durch zugesetztes Aluminium unter Einwirkung der Halogene in situ gebildet werden kann. Als SE-Gasteilchen können neben dreiwertigen Halogeniden auch dimere Gasteilchen auftreten oder größere Komplexe der Zusammensetzung $SE_nCl_{n+2n}$.

Als Gaskomplexe können auftreten $SEMe_nX_3+3n,g$, wobei ME Al, Fe, Co, In, Ga oder Cr ist. Eine Apparatur und/oder ein Verfahren nach der vorliegenden Erfindung, insbesondere der wie hierin beschriebene Ofen, ermöglicht den Transport und die Abscheidung der SE-Metalle sowie der intermetallischen Phasen $SE_2Me_{17}$, $SECo_5$, $SE_2Me_{14}B$, $Sm_2Fe_{18}N_3$ auf der heißeren Ofenseite.

Im Rahmen der vorliegenden Erfindung soll auch verstanden werden, dass das erfindungsgemäße Verfahren gegenüber im Stand der Technik bekannten Verfahren, insbesondere solchen, die eine thermische Dissoziation, bspw. von $NdI_3,g$ nach erfolgter Sublimation von $NdI_3,g$ zur heißeren Stelle beschreiben, vorteilhaft ist, was anhand des Beispiels des chemischen Transports von SE-Metall, in Form von Nd, und einem Transportmittel in Form von Iod im Folgenden weiter erläutert wird, ohne jedoch darauf beschränkt zu sein. Beim chemischen Transport gemäß der vorliegenden Erfindung wird bevorzugt der Bodenkörper vom Transportmittel in der Gasphase unter Bildung eines gasförmigen Nd-Trijodid, gelöst, welches im Anschluss durch Diffusion bzw. im permanenten Strom des Transportmittels über den Bodenkörper durch Konvektion zur heißeren Abscheidezone wandern kann. Dort findet in umgekehrter Reaktion die Abscheidung des Nd,s statt.

Chemischer Transport: $Nd,s + 3/2\ I_2,g \leftrightharpoons NdI_3,g$

$\Delta_R G$ ist bei 900°C für diese Reaktion negativ ($\Delta_R G\ (1173) = -93{,}06$ kcal/mol). Dies bedeutet, dass im Temperaturgefälle $T_1 < T_2$ der Partialdruck von $NdI_3,g$ bei 300°C größer ist als bei 900°C $(p(NdI_3,g;300°C) > p(NdI_3,g;900°C))$. Somit ist auf der heißeren Abscheidezone $T_2$ die Löslichkeit von $NdI_3,g$ niedriger als in der Ladezone mit $T_1$, sodass sich Nd,s in umgekehrter Reaktion der Transportgleichung abscheiden kann. Grundlage ist demzufolge eine Diffusion von $NdI_3,g$ zur heißeren Stelle bzw. im permanenten Strom des Transportmittels über das Substrat eine Konvektion und keine wie im Stand der Technik beschrieben Sublimation.

$$NdI_3,s \rightarrow NdI_3,g \text{ (Sublimation)}$$

$$NdI_3,g \rightarrow Nd,s + 3/2\, I_2,g \text{ (Thermische Dissoziation)}$$

$$Kp = p(NdI_3,g)/(p(I_2,g)^{3/2})$$

Ein Fachmann wird dabei unmittelbar erkennen, dass mit einem wie im Stand der Technik beschriebenen Verfahren durch Vorlage von $NdI_3,s$ nur $Nd,s$ abgeschieden werden kann. Es ist dabei die Erkenntnis der vorliegenden Erfinder, dass Intermetallische Phasen der SE-Metalle, wie bspw. $SECo_5$ nicht mit einem derartigen Verfahren wie im Stand der Technik erhalten werden können. Im Gegensatz dazu kann vorteilhaft gemäß dem erfindungsgemäßen Verfahren über chemischen Transport eine derartige intermetallische Phase eines SE-Metalls erhalten werden, in dem man im Falle von $SECo_5$ bspw. ein Substrat aus den Metallen SE und Co, und im Falle von $Nd_2Fe_{14}B$ bspw. ein Granulat aus Nd-Fe-B vorlegt und aus der Gasphase die intermetallische Verbindungen abscheidet. Daher kann in einem wie im Stand der Technik bekannten Verfahren durch die Methode der thermischen Dissoziation von bspw. Nd-Jodiden und durch die Wahl des Substrates nur das entsprechende SE-Metall zurückgewonnen werden, nicht aber die intermetallische Phase. Mit anderen Worten erlaubt das erfindungsgemäße Verfahren insbesondere das Transportieren eines SE-Metalls/ oder einer SE-enthaltenden Verbindung insbesondere in Form der intermetallische Phasen oder Boride und deren abscheiden an der Abscheidezone L2. Der Fachmann wird daher unmittelbar erkennen, dass mittels der erfindungsgemäßen Verfahrens vorteilhaft ermöglicht wird, völlig neue Permanentmagnete abzuscheiden, insbesondere solche die im Phasendreieck Nd-Fe-B noch bessere magnetische Eigenschaften besitzen können. Gleiches gilt ebenfalls für alle SE-haltigen Phasendreiecke, bestehend aus SE-Metall, Fe und/oder Bor oder Stickstoff.

Der chemische Transport nach dem erfindungsgemäßen Verfahren ermöglicht darüber hinaus den Einsatz verschiedener Transportmittel. Beispielsweise, können neben Jod auch Brom oder Chlor oder Hydrogenhalogenide oder Kombinationen mit Aluminiumhalogeniden eingesetzt werden. Dadurch können die Transportraten vorteilhaft noch gesteigert werden und/oder weiter vorteilhaft gezielt intermetallische Phasen hergestellt werden. Man ist also nicht wie in im Stand der Technik bekannten Verfahren nur auf die Sublimation und thermische Zersetzung von $NdI_3$ angewiesen

Der Fachmann wird in diesem Zusammenhang ebenfalls erkennen, dass je nach gewähltem Transportmittel zum einen die Transportraten, zum anderen aber auch die Zusammensetzung der intermetallischen Phasen variieren können, was im Rahmen des erfindungsgemäßen Verfahrens vorteilhaft genutzt werden kann. Daher wird, zusätzlich zur Temperatur, durch die mögliche Wahl des Transportmittels, eine weitere Einflussgröße hinzugewonnen, die erlaubt, möglichst direkt neue intermetallische Phasen mit magnetischen Eigenschaften herzustellen.

Ferner ermöglicht der chemische Transport gemäß dem Verfahren nach der vorliegenden Erfindung, in der Ladezone L1 dem Substrat verschiedene Stoffe oder Elemente, insbesondere Metalle wie z.B. Kobalt, zur Dotierung hinzuzusetzen. Dabei wird unmittelbar erkannt werden, dass die Stoffe zur Dotierung der recycelten Endprodukte ebenfalls mit dem Transportmittel reagieren werden und sich ebenfalls in der Gasphase lösen werden, sodass z.B. das Kobalt in Form der gasförmigen Kobaltjodide zur heißeren Seite wandern kann um bei T2 auf der heißeren Seite Kobalt-Metall im Gitter der Permanentmagnete einzubauen.

Die Erfindung wird im Folgenden anhand von Beispielen und unter Bezugnahme auf die Zeichnungen weiter erläutert, aus denen sich weitere Vorteile, Ausgestaltungsformen und Merkmale der Erfindung ergeben.

Für die folgenden Beispiele 1 und 2 wird ein Ofen mit Ofenkammern aus Korund ($Al_2O_3$) und einem Rohr aus Quarz, insbesondere eine Quarzampulle der Länge von etwa 10cm verwendet. Es soll jedoch verstanden werden, dass auch Beispiel 1 und 2 mittels eines Ofen wie in Beispiel 3 beschrieben durchgeführt werden können.

Beispiel 1

**$SECo_5,s$ (SE=Sm, Pr) und $SE_2Me_{17},s$ (SE=Sm; Me=Fe, Cu, Co, Zr, Hf)**

**Transportmittel $X_2$, wobei X ausgewählt ist aus der Gruppe Cl, Br und I.**

Die SE-Metalle werden wie zuvor als Trihalogenide in der Gasphase gelöst. Kobalt (Co) wird in Form der Dihalogenide transportiert. In den Verbindungen vom Typ $SE_2Me_{17},s$ wird Kupfer (Cu) über $CuX_2,g$ und Fe im Falle der Transportmittel $X_2$ über $FeX_3,g$ sowie Zr und Hf über die vierwertigen Halogenide $MeX_4,g$ gelöst.

**Transportmittel X$_2$/AlX$_3$, wobei X ausgewählt ist aus der Gruppe Cl, Br und I**

Durch Zusatz von AlX$_3$,g lässt sich auch bei den intermetallischen Phasen durch Bildung von Gaskomplexen der Zusammensetzung SEAl$_2$X$_9$,g die Löslichkeit steigern.

**Transportmittel HX,g oder HX/AlX$_3$ oder NH$_4$X,g/AlX$_3$,g, wobei X ausgewählt ist aus der Gruppe Cl, Br und I**

Mit diesen Transportmitteln erfolgt der Transport bei Beteiligung von Fe und Co über die Dihalogenide. Für die anderen beteiligten Elemente ergibt sich zu dem Transportmittel X$_2$ oder X$_2$/AlX$_3$,g kein Unterschied. Durch die Bildung von gasförmigen Wasserstoff auf der Produktseite wird die Abscheidung der intermetallischen Phasen in der Senke gefördert.

Beispiel 2

**SE$_2$Me$_{14}$B, wobei SE ausgewählt ist aus der Gruppe Nd, Pr und Dy; und Me ausgewählt ist aus der Gruppe Fe und Co; und Sm$_2$Fe$_{18}$N$_3$**

Der Permanentmagnet Nd$_2$Fe$_{14}$B disproportioniert unter 1 bar Wasserstoff ab 650 °C in Neodymhydrid, alpha-Eisen und Eisenborid. Jedoch rekombinieren die Disproportionierungsprodukte bei 1000°C wieder zu dem Permanent-magneten Nd$_2$Fe$_{14}$B. Aus diesem Grund liegt die Abscheidungstemperatur für den direkten Transport des Permanent-magneten Nd$_2$Fe$_{14}$B oberhalb 1000°C. Sollte die Disproportionierungsreaktion des Permanentmagneten Nd$_2$Fe$_{14}$B dominierend sein, wird dem Ausgangsbodenkörper bzw. Substrat bis zu 50 % Co zugesetzt, welches die Disproportionierung unterdrückt. Der Zusatz von Co hat ferner den Vorteil, dass sich die magnetischen Eigenschaften wie z.B. die Remanenz mit steigendem Co-Gehalt verbessern.

Der Transport mit NH$_4$Cl bietet den Vorteil, die Löslichkeit des SE-Metalls in der Gasphase zu erhöhen, weil durch die Bildung von Ammoniak das Gleichgewicht zur Produktseite hin verschoben wird. Die Zugabe von AlCl$_3$, entweder über die Zugabe von festem AlCl$_3$ oder durch Chlorierung von Al, beabsichtigt ebenfalls die Erhöhung der Löslichkeit für die SE-Metalle durch Bildung eines Gaskomplexes NdAl$_2$Cl$_9$,g oder NdAl$_3$Cl$_{12}$,g.

**Transportgleichgewicht für Nd$_2$Fe$_{14}$B mit dem Transportmittel: NH$_4$Cl/AlCl$_3$**

$$Nd_2Fe_{14}B + 37\ NH_4Cl + 4\ AlCl_3 = 2\ NdAl_2Cl_9,g + 14\ FeCl_2,g + BCl_3,g + 37\ NH_3,g + 37/2\ H_2,g$$

Beispiel 3

Als Substrat 2 kann im Rahmen der vorliegenden Erfindung insbesondere Elektronikschrott verwendet werden. Derartiger Elektronikschrott wird beispielsweise aus Computern gewonnen. Beispiel 3 beschreibt die Herstellung eines für das erfindungsgemäße Verfahren bzw. die erfindungsgemäße Vorrichtung verwendeten Substrats. Der Fachmann wird unmittelbar anerkennen, dass ein handelsüblicher Computer durchschnittlich einen Neodym-Gehalt von etwa 5g aufweist. Zur Durchführung des erfindungsgemäßen Verfahrens wird ein handelsüblicher Computer mit einem Gesamtgehalt an Neodym von 5032 mg in Festplatte, Lautsprecher, CD-ROM-Laufwerk, Mainboard-Lüfter, Netzteil-Lüfter und Diskettenlaufwerk, in sämtliche Einzelteile zerlegt und die Magnete der Festplatte, der Lautsprecher, des CD-ROM-Laufwerkes, der Lüfter und des Diskettenlaufwerkes ausgebaut. Dabei weisen die ausgebauten Bauteile die folgenden Neodym-Gehalte auf:

- Festplatte: 3621 mg
- Lautsprecher 310 mg
- CD-ROM-Laufwerk 977 mg
- Mainboard-Lüfter 4 mg
- Netzteil-Lüfter 4 mg
- Diskettenlaufwerk 116 mg

Anschließend werden die Bauteile in einer Mühle zu einem groben Granulat mit etwa 0,1-5 mm Körnung zermahlen. Das erhaltene Granulat kann als Substrat 2 in der Ladezone L1 der erfindungsgemäßen Vorrichtung 1, bspw. einem Zweizonenofen vorgelegt werden.

Es soll verstanden werden, dass wie in Beispiel 3 beschrieben ein SE-Metall in dem das wenigstens eine SE-Metall aufweisenden Substrat 2 in elementarer Form, als Legierung und/oder als, bevorzugterweise magnetische Eigenschaften aufweisende, intermetallische Phase vorliegt.

Beispiel 4

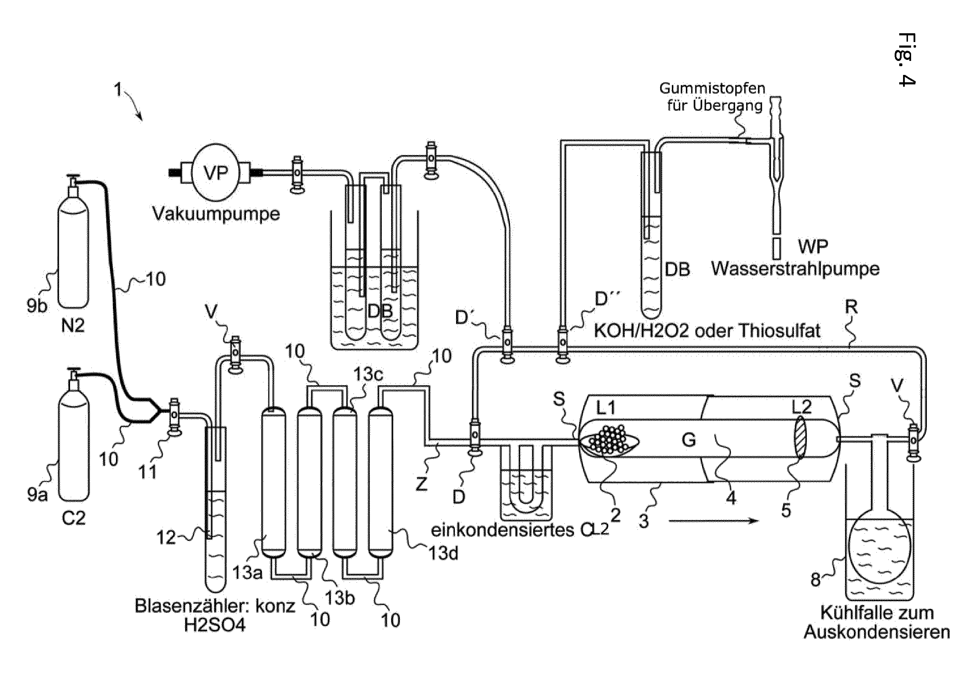

Für das im Folgenden beschriebene Beispiel 4 kann insbesondere ein wie in Fig. 4 gezeigter Ofen verwendet werden. Mit einem Ausgangsbodenkörper aus $Nd_2Fe_{14}B$ und dem Transportmittel Jod im Temperaturbereich 300°C bis 1000°C erfolgt der chemische Transport gemäß dem erfindungsgemäßen Verfahren von Neodym von der kälteren Ladezone L1 in die heißere Abscheidezone L2 ausschließlich über das gasförmige Trijodid. Oberhalb von 700°C liegt der Partialdruck von $NdI_3$,g über $10^{-5}$ atm, sodass oberhalb dieser Temperatur ein merklicher Transport stattfindet. In der nachfolgenden Tabelle 1 sind die Partialdrücke in atm der beteiligten Gasteilchen über dem Bodenkörper $Nd_2Fe_{14}B$,s im Temperarturbereich 300°-1000°C aufgeführt:

Tabelle 1

| T [°C] | P ($I_2$,g) [atm] | p (I,g) [atm] | p ($NdI_3$,g) [atm] | p ($Fe_2I_4$,g) [atm] | p ($FeI_2$,g) [atm] | p (BI,g) [atm] | p ($BI_2$,g) [atm] | p ($BI_3$,g) [atm] | p Ges [atm] |
|---|---|---|---|---|---|---|---|---|---|
| 300 | 2,17E-36 | 8,43E-23 | 5,27E-17 | 1,58E-63 | 3,34E-35 | 8,49E-39 | 1,99E-50 | 2,82E-58 | 5,27E-17 |
| 400 | 1,46E-28 | 7,13E-18 | 2,06E-12 | 4,11E-51 | 2,66E-27 | 1,25E-30 | 3,50E-41 | 5,81E-48 | 2,06E-12 |
| 500 | 8,67E-24 | 3,32E-14 | 2,24E-08 | 1,23E-42 | 6,11E-22 | 5,06E-25 | 3,50E-35 | 2,35E-40 | 2,24E-08 |
| 600 | 7,03E-20 | 1,13E-11 | 2,68E-06 | 2,77E-36 | 1,17E-18 | 2,15E-21 | 7,38E-31 | 1,16E-35 | 2,68E-06 |
| 700 | 5,56E-17 | 1,60E-09 | 1,64E-05 | 4,28E-32 | 1,91E-15 | 4,47E-18 | 1,02E-25 | 9,94E-31 | 1,64E-05 |
| 800 | 5,07E-16 | 2,34E-09 | 1,53E-04 | 3,72E-29 | 4,53E-14 | 8,82E-17 | 1,24E-22 | 2,82E-29 | 1,53E-04 |
| 900 | 1,05E-14 | 2,21E-08 | 2,39E-04 | 1,69E-29 | 9,23E-13 | 5,22E-15 | 1,36E-20 | 1,34E-29 | 2,39E-04 |
| 1000 | 1,14E-13 | 1,35E-07 | 2,59E-04 | 2,69E-27 | 1,29E-11 | 1,50E-13 | 6,09E-19 | 4,52E-28 | 2,59E-04 |

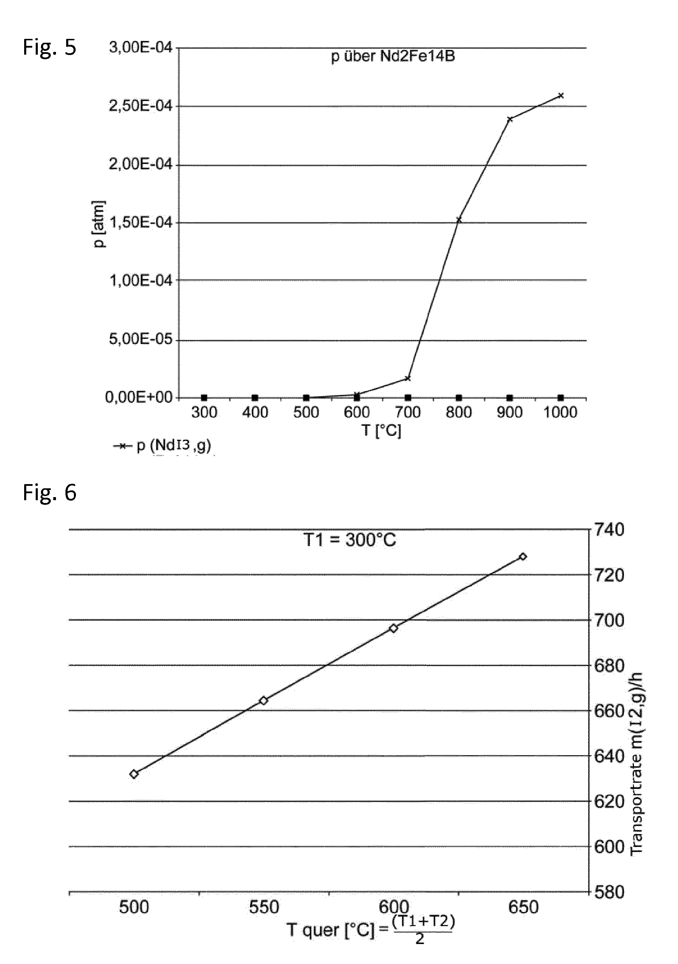

Der Verlauf des Partialdruckes über einem $Nd_2Fe_{14}B$- Ausgangsbodenkörper ist in Fig. 5 gezeigt.

Über einem Bodenkörper bestehend aus festem Neodym, Eisen und Bor insbesondere in der stöchiometrischen Zusammensetzung 2 Anteile Nd, 14 Anteile Fe und 2 Anteile B wird der Partialdruck vornehmlich durch das Trihalogenid des Neodym bestimmt. Andere Jodide des Eisens und des Bors spielen unter diesen Transportbedingungen keine Rolle. Durch die Variation des Transportmittels insbesondere beim Übergang zu $NH_4X$ (X=Cl, Br,I) können durch die Bildung von gasförmigen Ammoniak und gasförmigen Wasserstoff auf der Produktseite die Beteiligung der Borhalogenide und der Eisenhalogenide merklich zunehmen, sodass der Transport von intermetallischen Phasen oder Permanentmagnete der Zusammensetzung $Nd_xFe_yB_z$ unter den reduktiven Bedingungen des Wasserstoffs ermöglicht wird.

Werden in der Ladezone L1 einer erfindungsgemäßen Vorrichtung 1 ca. 100 g Granulat eines Permanentmagneten $Nd_2Fe_{14}B$,s vorgelegt, das bspw. wie Beispiel 3 erzeugt wird, beträgt die Transportrate für Neodym mit dem **Transportmittel Jod,** bei einer Ausgangskonzentration von 10 mmol, 728,3 mg Nd/h. Dabei wird der Fachmann erkennen, dass durch die Umsetzung des Ausgangsbodenkörpers $Nd_2Fe_{14}B$,s in der Ladezone L1 mit dem Transportmittel Jod, als weiterer Bodenkörper $NdI_3$,s gebildet wird.

Für die in Fig. 4 gezeigte Apparatur 1 mit Chlorierungsanlage kann das Reaktionsvolumen innerhalb des Rohres welches sich unmittelbar im Zweizonenofen 3 befindet, 4020 $cm^3$ betragen. Dabei scheidet sich in der heißeren Abscheidezone L2 unter Annahme, dass die Diffusionsstrecke 70 cm und der Querschnitt des Transportrohres 50 $cm^2$ beträgt, ausschließlich Neodym ab.

Wie unmittelbar aus Fig. 6 ersichtlich ist, nimmt bei konstanter Temperatur $T_1$ die Transportrate signifikant mit T quer ab, wobei T quer = $(T_1 + T_2)$/2 ist.

Fig. 6 zeigt den Anstieg der Transportrate $(I_2,g)$ / h mit dem Transportmittel Jod durch Vergrößerung von T quer, welche daraus resultiert, dass T1 mit 300°C festgehalten wird und T2 variiert wird. Dadurch vergrößert sich $\Delta T$ wodurch unmittelbar die Transportrate gesteigert werden kann.

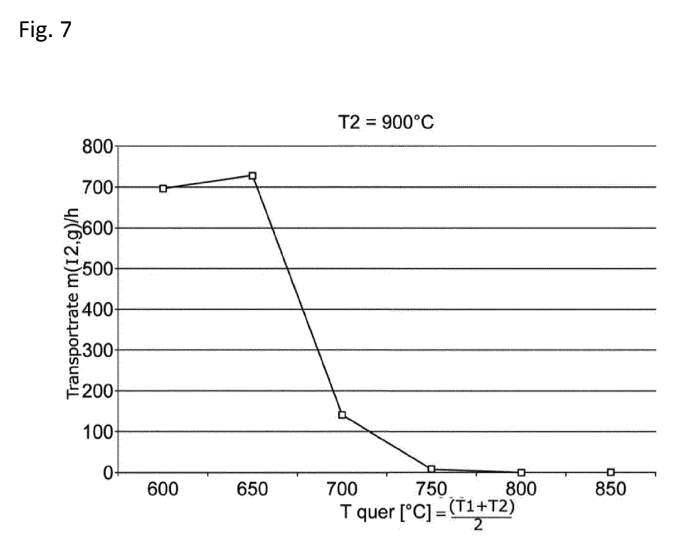

Wie unmittelbar aus Fig. 7 ersichtlich wird bei Variation von T1 und bei T2 = 900°C oberhalb T quer = 750 °C kein merklicher Transport mehr stattfinden.

Aus Fig. 7 lässt sich unmittelbar entnehmen, wie die Transportrate von Nd mit dem Transportmittel Jod durch T1 der Temperatur des Laderaums beeinflusst wird. Hält man die Abscheidungstemperatur konstant bei 900°C und variiert T1 von 300°C um 100°C Schritte steigt zwar T quer an, jedoch verringert sich $\Delta T$, sodass die Transportrate merklich abnimmt und bei T quer = 750 °C bei T2 = 900°C) nahezu vollständig zum Erliegen kommt. Für 5032 mg Nd pro PC benötigt man unter Annahme von stationären Transportbedingungen somit ca. 7 h Transportdauer, um das gesamte Neodym aus dem Ausgangsbodenkörper herauszulösen. Der Fachmann wird jedoch unmittelbar anerkennen, dass durch das strömende System und der dadurch bedingten Konvektion die Transportrate jedoch deutlich über den maximal berechneten 728,3 mg/h liegen wird, sodass die Transportdauer von 7 h im realen Fall deutlich unterschritten werden kann.

Mit dem Transportmittel Chlor (10 mmol) können unter den gleichen Rahmenbedingungen im Temperaturgefälle 300°C -> 900°C eine Transportrate für Neodym von 697 mg/h erhalten werden. Im Ausgangsbodenkörper wird dabei $NdCl_3$,s gebildet, wodurch der Partialdruck von $NdCl_3$,g im gesamten Temperaturbereich nicht höher als $10^{-10}$ atm ist. Ein Transport von Nd mit dem Transportmittel Chlor ist unter diesen oxidativen Rahmenbedingungen des gewählten Transportmittels trotz einer Transportrate von annähernd 700 mg/h weitestgehend auszuschließen. Dies ist der Fall, da die notwendigen Partialdrücke nicht erreicht werden. Allerdings kann durch das Transportmittel $NH_4Cl$ und der dadurch herrschenden reduktiven Bedingungen des entstehenden Wasserstoffs der Transport über gasförmige Nd-Chloride begünstigt werden.

Alle beschriebenen Ausführungsformen der Erfindung haben den Vorteil, dass mit dem erfindungsgemäßen Verfahren und/oder der erfindungsgemäßen Apparatur SE-Metalle direkt oder als deren intermetallische Phasen im Temperaturgradienten von einer Temperatur $T_1$ der Ladezone L1 hin zu einer Temperatur $T_2$ der Abscheidezone L2, wobei $T_2$ größer ist als $T_1$ gewonnen werden können. An einer Abscheidungsvorrichtung gemäß der vorliegenden Erfindung in einer Apparatur und/oder einem Verfahren nach der vorliegenden Erfindung werden dabei sehr reine SE-Metalle oder deren Verbindungen abgeschieden, die insbesondere direkt wieder zur Herstellung von Permanentmagneten oder bei Abscheidung von magnetischen intermetallischen Phasen direkt als Permanentmagnet eingesetzt werden können. Hierdurch wird vorteilhafterweise keine Reduktion von Chloriden notwendig, wodurch das erfindungsgemäße Verfahren und/oder die erfindungsgemäße Apparatur unter wirtschaftlichen Gesichtspunkten und da ohne Lösungsmittel auch umweltfreundlichen Gesichtspunkten vorteilhaft ist. In Elektronikschrott liegen SE-Metalle in den verwendeten Magneten zumeist als Metall vor. Beim erfindungsgemäßen chemischen Transport von einer Temperatur $T_1$ der Ladezone L1 hin zu einer Temperatur $T_2$ der Abscheidezone L2, wobei $T_2$ größer ist als $T_1$ ist, bleibt die Oxidationsstufe der SE-Metalle erhalten und es wird vorteilhafterweise das reine Metall zurückgewonnen. Insoweit kehrt sich die vorliegende Erfindung ab von den vorbekannten Verfahren, bei denen ein chemischer Transport von heiß nach kalt durchgeführt wurde und bei dem als Produkt SE-Halogenide abgeschieden werden, die wieder aufwendig reduziert werden müssen. Verunreinigungen die sich umständehalber im Schrott befinden werden ebenfalls in der Gasphase gelöst, und scheiden sich in der kälteren Zone ab. Daher muss auch hier aufwendig getrennt werden. Beispielsweise könnte sich Nickelchlorid und Eisenchlorid neben SE-Chlorid abscheiden oder auch sauerstoffhaltige Verunreinigungen in die Senke transportiert werden. Beim erfindungsgemäßen chemischen Transport von kalt nach heiß und der Abscheidung von SE-Metallen können solche Verunreinigungen vorteilhafterweise im Quellenbodenkörper verbleiben. Besonders vorteilhaft erlaubt die vorliegende Erfindung die gezielte Gewinnung neuer Elektromagnete mit verbesserten elektromagnetischen Eigenschaften über die Steuerung bzw. Steuerbarkeit der Reaktionsbedingungen, sowie der Möglichkeit durch Dotieren die elektromagnetischen Eigenschaften des transportierten Produktes des erfindungsgemäßen Verfahrens, bzw. in der erfindungsgemäßen Apparatur zu steigern.

Die Erfindung wird im Folgenden unter Bezugnahme auf die Zeichnungen weiter erläutert, aus denen sich weitere Vorteile, Ausgestaltungsformen und Merkmale der Erfindung ergeben. Es zeigen

FIG 1A, 1B und 1C schematische Darstellungen erfindungsgemäßer Mehrzonenofen nach einer ersten, zweiten und dritten Ausführungsform der vorliegenden Erfindung;

FIG 2A einen schematischen Temperaturverlauf in einem erfindungsgemäßen Verfahren nach einer ersten Ausführungsform;

FIG 2B eine schematische Darstellung eines erfindungsgemäßen Mehrzonenofens nach der ersten Ausführungsform; und

FIG 3A einen schematischen Temperaturverlauf in einem erfindungsgemäßen Verfahren nach einer zweiten Ausführungsform;

FIG 3B eine schematische Darstellung eines erfindungsgemäßen Mehrzonenofens nach einer vierten Ausführungsform;

FIG 4 eine schematische Darstellung einer erfindungsgemäßen Apparatur nach einer fünften Ausführungsform;

FIG 5 ein Diagramm des Verlaufs des Partialdruckes über einem $Nd_2Fe_{14}B$-Ausgangsbodenkörper;

FIG 6 ein Diagramm des Verlaufs der Transportrate von Neodym mit Jod in Abhängigkeit von T quer bei Variation von der Abscheidungstemperatur T2 und T1 = 300°C; und

FIG 7 ein Diagramm des Verlaufs der Transportrate von Neodym mit Jod in Abhängigkeit von T quer bei Variation von der Ladenzonentemperatur T1 und T2 = 900°C.

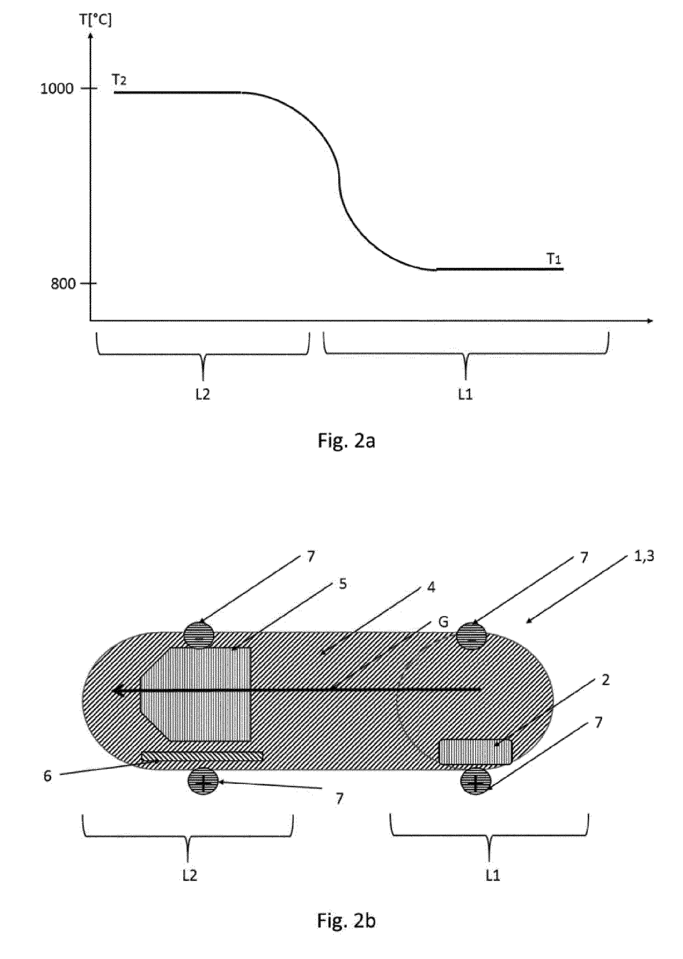

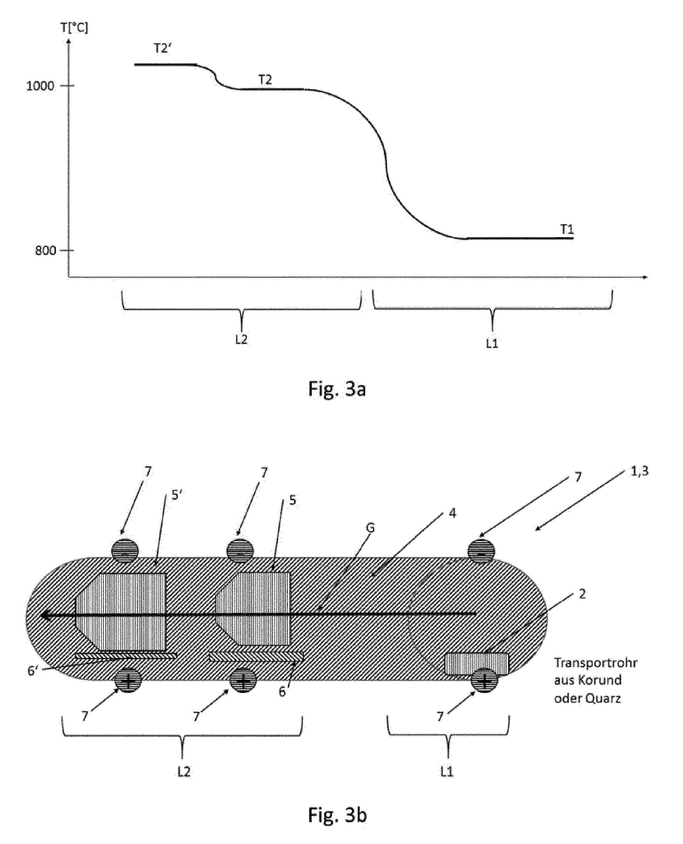

FIG 1 und 2B zeigen eine schematische Darstellung einer ersten Ausführungsform einer Apparatur 1 gemäß der vorliegenden Erfindung. Dabei ist der gezeigte Mehrzonenofen 1 zur Rückgewinnung wenigstens eines SE-Metalls aus einem das wenigstens eine SE-Metall aufweisende Substrat 2 mittels eines hermetisch verschließbaren Reaktors 3 geeignet. Eine solche erfindungsgemäße Apparatur 1 umfasst (a) eine auf eine Temperatur $T_1$ und einem Druck $P_1$ beheizbare Ladezone L1 zur Aufnahme des SE-metallhaltigen Substrats 2; (b) einen ersten Kanal 4 zur Ermöglichung eines Gasflusses G von der Ladezone L1 zur Abscheidezone L2; und (c) eine beheizbare Abscheidezone L2 mit einer beheizbaren Abscheidungsvorrichtung 5 zum Abscheiden des wenigstens einen Selten-Erd-Metalls bei einer Abscheidungstemperatur $T_2$ und einem Druck $P_2$, und ist gekennzeichnet dadurch, dass die beheizbaren Abscheidungsvorrichtung 5 mit einem metallischen Material beschichtet ist und/oder aus einem metallischen Material gebildet ist, das einen Schmelzpunkt von mindestens 2000 °C aufweist und wobei $T_2$ größer $T_1$ ist. Ein solcher Ofen 1 weist bevorzugterweise eine Ofenkammer aus Korund ($Al_2O_3$) und einem Rohr 4 aus Quarz auf. Die in Fig. 3B gezeigte zweite Ausführungsform unterscheidet sich von der in FIG 1 und FIG 2B gezeigten Ausführungsform darin, dass die Abscheidezone L2 eine weitere Abscheidungsvorrichtung 5' zum Abscheiden wenigstens eines weiteren SE-Metalls bei einer Abscheidungstemperatur $T_2$' und einem Druck $P_2$' umfasst und, wobei bevorzugterweise $T_2$' größer $T_2$ ist. Dabei sind mehrere, hier zwei Abscheidungsvorrichtungen 5 und 5' hinsichtlich eines Gasflusses G hintereinander angeordnet. Vorzugsweise ist $T_2$' etwa 50 °C bis etwa 100 °C höher als $T_2$. So können bevorzugterweise durch Anordnung mehrerer Abscheidungsvorrichtungen hinsichtlich eines Gasstromes G, bevorzugterweise bis zu fünf Abscheidungsvorrichtungen, jeweils mit einer um etwa 50°C bis etwa 100°C höheren Abscheidungstemperatur mehrere verschiedene SE-Metalle in einer erfindungsgemäßen Vorrichtung 1 an jeweils unterschiedlichen Abscheidungsvorrichtungen abgeschieden werden. Die Abscheidezone L2 weist eine als Vertiefung und/oder Gefäß ausgebildete Aufnahmevorrichtung 6 zur Aufnahme von, bevorzugterweise geschmolzenem SE-Metall und/oder intermetallischer Phase auf, und ist unterhalb der Abscheidungsvorrichtung 5 positioniert. Entsprechend ist in der in FIG 3B gezeigten Ausführungsform der erfindungsgemäßen Vorrichtung in der Abscheidezone L2 eine zweite als Vertiefung und/oder Gefäß ausgebildete Aufnahmevorrichtung 6' zur Aufnahme von einem weiteren bevorzugterweise geschmolzenem SE-Metall und/oder intermetallischer Phase auf, und ist unterhalb der Abscheidungsvorrichtung 5' positioniert. Das wenigstens eine SE-Metall wird in elementarer Form oder in der Form einer Verbindung rückgewonnen, wobei die Verbindung bevorzugterweise ausgewählt ist aus der Gruppe umfassend intermetallische Phasen, Borid und Nitrid. Hier sind die Abscheidungsvorrichtungen 5 bzw. 5' als gemäß einer laminaren Strömung geformtes, Wolframnetz ausgebildet, das bevorzugterweise eine Loch oder Maschenweite im Bereich von etwa 0,1 mm bis etwa 2 mm aufweist. Der erste Kanal 4 ist als Diffusionsstrecke zum chemischen Transport des wenigstens einen SE-Metalls mittels eines Transportmittels in einem Temperaturgradienten ausgebildet. Die in Fig. 1B dargestellte Ausführungsform der erfindungsgemäßen Apparatur unterscheidet sich von der in Fig. 1A dargestellten Ausführungsform dadurch, dass auf der Seite der Quelle L1 auf ein Muffenpaar zum Anschluss des Ofens 3 an weitere Vorrichtungen verzichtet wurde. Zusätzlich oder alternativ zu derartigen Muffen, kann der Reaktor 3 an einem oder beiden Enden einen Schliff S aufweisen, um den Reaktor 3 mit weiteren Bauteilen zu verbinden. Die in Fig. 1C dargestellte Ausführungsform des erfindungsgemäßen Ofens 3 unterscheidet sich dadurch, dass in der Abscheidezone L2 eine Aufnahmevorrichtung 6 zur Aufnahme von, bevorzugterweise geschmolzenem, SE-Metall und/oder intermetallischer Phase, vorgesehen ist. Die Aufnahmevorrichtung 6 ist dabei vorteilhaft unterhalb der Abscheidungsvorrichtung 5 positioniert. Wie in Fig. 1C dargestellt, kann die Aufnahmevorrichtung 6 als Vertiefung und/oder Gefäß ausgebildet sein. Vorliegend umfasst die Aufnahmevorrichtung 6 einen Sammelrichter 6, 61, bevorzugt aus Wolfram, indem sich das vorzugsweise geschmolzene SE-Metall und/oder intermetallischer Phase sammeln kann. Weiterhin umfasst die Aufnahmevorrichtung 6 eine Auffangschale 6,62 in der das in den Sammelrichter fließende oder darin gesammelte vorzugsweise geschmolzene SE-Metall und/oder intermetallischer Phase aufgenommen und schließlich vorteilhaft der Apparatur 3 entnommen werden kann. Zweckmäßig führt ein Rohrelement des Sammeltrichters 6, 61 in die Auffangschale 6, 62, um ein möglichst verlustfreies Aufnehmen bzw. Abflie?en des vorzugsweise geschmolzenen SE-Metalls und/oder intermetallischer Phase in die Auffangschale 6, 62 zu ermöglichen. Dabei kann besonders vorteilhaft ein derartiger Sammeltrichter 6, 61 und insbesondere ein derartiges Rohrelement ein Regulierelement 6, 63, in Form bspw. eines Schiebers, eines Ventils, eines Hahnes oder dergleichen aufweisen, um die Ableitung des vorzugsweise geschmolzenen SE-Metalls und/oder intermetallischer Phase in die Auffangschale 6, 62 zu regulieren. Besonders voreilhaft kann dabei ein derartiges Regulierelement 6, 63 als wie üblicherweise bei Hochöfen ausgestalteten Schieber ausgestaltet sein.

Fig. 2A zeigt einen typischen Temperaturverlauf in einem Ofen 1 gemäß der ersten in Fig 2B dargestellten Ausführungsform.

Fig. 3A zeigt einen typischen Temperaturverlauf in einem Ofen 1 gemäß der vierten in Fig 3B dargestellten Ausführungsform.

Ein erfindungsgemäßes Verfahren zur Rückgewinnung wenigstens eines SE-Metalls aus einem das wenigstens eine SE-Metall aufweisende Substrat 2 umfasst wenigstens die folgenden Schritte:(a) Bereitstellen des Substrats 2 in einer beheizbaren Ladezone L1 bei einer Temperatur $T_1$ und einem Druck $P_1$, (b) Bereitstellen wenigstens einer Abscheidungsvorrichtung 5 in einer beheizbaren Abscheidezone L2 bei einer Temperatur $T_2$ und einem Druck $P_2$, (c) Chemisches Transportieren des SE-Metalls und/oder einer das SE-Metall enthaltenden Verbindung, in einem Temperatur- und/oder Druckgradienten von der Ladezone L1 zur Abscheidezone L2; und ist dadurch gekennzeichnet, dass $T_2 > T_1$ ist.

Ein solches erfindungsgemäßes Verfahren, insbesondere Schritt (a), umfasst weiter einen Schritt des Bereitstellens eines Transportmittels, wobei das Transportmittel geeignet ist, bei der Temperatur $T_1$ und einem Druck $P_1$ mit dem SE-Metall zu einer gasförmigen Verbindung zu reagieren, und wahlweise, Bereitstellen von festem Aluminiumhalogenid des Chlors, Broms oder Jods, welches bei der Temperatur $T_1$ und dem Druck $P_1$ gasförmig ist und geeignet ist, mit der gasförmigen Verbindung zu Gasphasenkomplexen zu reagieren. Bevorzugterweise wird in Schritt (a) ein Schritt des (a') des Herstellens des Druckes $P_1$ in der beheizbaren Ladezone L1 und Erhitzen des SE-metallhaltigen Substrats 2 auf die Temperatur $T_1$ bei dem Druck $P_1$ in der beheizbaren Ladezone L1 durchgeführt; und/oder in Schritt (b) wird weiter ein Schritt (b') des Herstellens des Druckes $P_2$ in der beheizbaren Abscheidezone L2 und Erhitzen der Abscheidungsvorrichtung auf die Temperatur $T_2$ bei dem Druck $P_2$ in der beheizbaren Abscheidezone L2 durchgeführt. Bevorzugterweise wird das erfindungsgemäße Verfahren insbesondere Schritt (c) weiter einen Schritt (c') des Kontaktierens und Reagierens des Transportmittels umfassend, und wahlweise des festen Aluminiumhalogenids, mit dem gemäß Schritt (a) und/oder (a') behandelten Substrats, so dass das Transportmittel mit dem Substrat zu einer gasförmigen Verbindung und/oder zu einem Gasphasenkomplex reagiert; und/oder (c") Kontaktieren einer gasförmigen Verbindung oder eines Gasphasenkomplexes mit der gemäß Schritt (b) und/oder (b') vorbehandelte Abscheidungsvorrichtung, wobei die gasförmige Verbindung an der Abscheidungsvorrichtung in das elementare SE-Metall oder eine intermetallische Phase enthaltend das SE-Metall oder Borid des SE-Metalls oder Nitride des SE-Metalls und das Transportmittel oder eine andere Verbindung zerfällt; und, wahlweise, einen Schritt (d) des Trennens des SE-Metalls von der Abscheidungsvorrichtung. Ein Fachmann wird unmittelbar verstehen, dass aufgrund der geringen Löslichkeitsdifferenzen in der Gasphase und der nie genauen Temperatureinstellung an der Abscheidungsvorrichtung 5, 5' sich etwas unterschiedliche Bedingungen für das Abscheiden der einzelnen Metalle ergeben werden, sodass man bei mehreren transportierten Metallen diese immer leicht trennen kann. Genauer, wird der Fachmann verstehen, dass mit einem Thermoelement die Temperaturen sich nicht ganz exakt einstellen lassen. Der Übergang von $T_2$ nach $T_1$ ist daher fließend, insbesondere da die höhere Ofentemperatur die kältere Seite beeinflusst. Dabei kann es zur Entstehung eines Maximums in der Abscheidungsvorrichtung kommen, besonders, da zum Ofenende hin die Temperatur wieder abfallen kann. So können sich in einem breiteren Senkenbereich minimale Löslichkeitsdifferenzen ergeben.

Aus Figuren 2B und 3B ist auch ersichtlich, dass mehrere Spannungsquellen 7 vorgesehen sind. Über die Spannungsquelle und hier nicht gezeigte Thermoelemente soll eine möglichst genaue Temperatur in der Ladezone L1 und/oder den Abscheidungsvorrichtungen 5 bzw. 5' und/oder den Senkenbereich L2 eingestellt werden.

Figur 4 zeigt eine schematische Darstellung eines erfindungsgemäßen Mehrzonenofens nach einer dritten Ausführungsform. Die in Fig. 4 gezeigte Vorrichtung 1 umfasst als Reaktor 3 einen ZweiZonenofen, der mit einer Chlorierungsanlage ausgestaltet ist. Ein derartiger Reaktor 3 kann wie im Wesentlichen im Zusammenhang mit Fig. 1 und Fig. 2a und Fig. 3a gezeigter Reaktor 3 ausgestaltet sein. Ein derartiger Zwei-Zonen Ofen 3 umfasst den Reaktor 3 als einen hermetisch verschließbaren, Reaktor 3, eine auf eine Temperatur $T_1$ und einem Druck $P_1$ beheizbare Ladezone L1 zur Aufnahme des SE-metallhaltigen Substrats 2, wie beispielsweise ein wie in Beispiel 3 hergestelltes Granulat, einen ersten Kanal 4 zur Ermöglichung eines Gasflusses G von der Ladezone L1 zur Abscheidezone L2; und eine beheizbare Abscheidezone L2 mit wenigstens einer beheizbaren Abscheidungsvorrichtung 5 zum Abscheiden des wenigstens einen Selten-Erd-Metalls bei einer Abscheidungstemperatur $T_2$ und einem Druck $P_2$, Dabei kann die beheizbaren Abscheidungsvorrichtung 5 besonders vorteilhaft mit einem metallischen Material beschichtet sein, das einen Schmelzpunkt von mindestens 2000 °C aufweist. Insbesondere kann die Abscheidezone L2 wenigstens eine weitere Abscheidungsvorrichtung 5' zum Abscheiden wenigstens eines weiteren SE-Metalls bei einer Abscheidungstemperatur $T_2'$ und einem Druck $P_2'$ umfassen, wobei bevorzugterweise $T_2'$ größer $T_2$ ist. In der Abscheidezone L2 ist bevorzugt wenigstens eine hier nicht dargestellte Aufnahmevorrichtung 6 zur Aufnahme von, bevorzugterweise geschmolzenem, SE-Metall und/oder intermetallischer Phase, vorgesehen, wobei, die Aufnahmevorrichtung 6 bevorzugt unterhalb der Abscheidungsvorrichtung 5, bzw. 5' positioniert ist. Dabei kann die Aufnahmevorrichtung 6 als Vertiefung und/oder Gefäß ausgebildet sein. Der erste Kanal 4 ist wie aus Fig. 4 ersichtlich als Diffusionsstrecke zum chemischen Transport des wenigstens einen SE-Metalls mittels eines Transportmittels in einem Temperaturgradienten ausgebildet. Eine wie in Fig. 4 dargestellte Apparatur 1 erlaubt dabei insbesondere, die Rückgewinnung des SE-Metalls aus einem das wenigstens eine SE-Metall aufweisenden Substrats, wie beispielsweise das in Beispiel 3 beschriebene Granulats, in elementarer Form oder in der Form einer Verbindung, wobei die Verbindung bevorzugterweise ausgewählt ist aus der Gruppe umfassend intermetallische Phasen, bestehend aus SE-Metall Eisen und Bor in Form von Borid oder Stickstoff in Form von Nitrid. Dabei kann vorteilhaft die Abscheidungstemperatur $T_2$ im Bereich von etwa 400°C bis etwa 1200°C und/oder die Temperatur $T_1$ im Bereich von etwa 300 °C bis etwa 1100 °C gewählt werden. Die Abscheidungsvorrichtung 5, bzw. 5' ist dabei bevorzugt als gemäß einer laminaren Strömung geformtes, Sieb, Netz, Lochplatte, Filter oder Röhrensystem ausgebildet, wobei bevorzugterweise eine Loch oder Maschenweite im Bereich von etwa 0,1 mm bis etwa 2 mm gewählt ist. Die Abscheidungsvorrichtung 5, bzw. 5' kann dabei insbesondere aus einem metallischen Material beschichtet und/oder aus einem metallischen Material gebildet sein, das ausgewählt ist aus der Gruppe umfassend Wolfram und Wolfram-Legierung. Das Transportmittel, ist bevorzugt bei $T_1$ und $P_1$ gasförmig und mit dem SE-Metall zu einer gasförmigen Verbindung, einem Halogenid oder Oxidhalogenid des Chlors, Broms oder Jods bei geringfügiger Beteiligung von Sauerstoff reagierbar.

Im vorliegenden Beispiel 4 wird besonders zweckmäßig ein Transportgas als Transportmittel, bspw. als Jod oder Chlor, verwendet. Wird als Transportmittel Chlor verwendet, kann dieses zweckmäßig mittels einer Gasflasche 9a gasförmig als $Cl_2$-Gas bereitgestellt werden. In einer weiteren Gasflasche 9b wird Stickstoff in Form von $N_2$-Gas bereitgestellt, das bedarfsweise dem Chlor zugemischt werden kann. Hierzu sind die Gasflaschen 9a und 9b über Kunststoffschläuche 10 mit Durchmesser 10 mm und ein geeignetes Mischventil 11 mit einem Blasenzähler 12 in Form einer Gas-Waschflasche von 50mm Durchmesser mit 1000 mL konzentrierter $H_2SO_4$ verbunden in den Gas aus Gasflaschen 9a und 9b in geeignetem Mischverhältnis eingeleitet wird. Dem Blasenzähler 12 nachfolgend und durch jeweils geeignete Rohr- oder Schlauchsysteme 10 in Form von 10mm Schläuchen verbunden, sind in Reihe 30 mm-Reaktoren 13 mit $CaCl_2$ (13a), $FeCl_3$ (13b), einem Molekularsieb (13c) und $P_2O_5$ (13d) angeordnet, durch die das Transportgas durchgeleitet werden kann. Dies dient im Wesentlichen der Trocknung, um weiteren Eintrag von Wasser und Sauerstoff zu vermeiden. Es soll jedoch verstanden werden, dass dies abhängig von der konkreten Ausgestaltung der erfindungsgemäßen Vorrichtung und dem gewählten Substrat nicht unbedingt notwendig ist, da ggf. durch das Substrat Sauerstoff in das System eingetragen wird. Dabei können den Reaktoren 13, 13a, 13b, 13c, bzw. 13d vor- und/ oder nachgeschaltet geeignete Ventile V angeordnet sein, um zweckmäßig den Gasfluss zu regulieren. Wird als Transportmittel Jod verwendet, können kleine Quarzglaskapillaren mit Jod befüllt und in die Ladezone L1 gelegt werden. Zusätzlich oder alternativ kann auch eine Kühlfalle 8 mit Jod befüllt werden.

Der Reaktor 3 hier ein Zwei-Zonen-Ofen mit einem Quarzrohr mit einem Durchmesser von 100mm weist an beiden Enden einen Schliff S auf, um diesen mit der Zu- bzw. Rückführleitung Z bzw. R zu verbinden. Die Zuleitung Z ist dabei als Rohr mit 50mm Durchmesser ausgestaltet, dass einerseits mit dem Reaktorenblock 13, andererseits mit dem Reaktor 3 auf dessen Ladezonen-Seite verbunden ist. Durch die Zuleitung Z wird dabei das Transportmittel aus dem Reaktorenblock 13 in den Reaktor 3 auf dessen Ladezonen-Seite eingeleitet. Dabei kann besonders zweckmäßig ein U-Rohr mit einem Einleitrohr mit Durchmesser 125mm zum Einkondensieren von $Cl_2$ bereitgestellt werden, das in der Zuleitung Z dem Reaktor 3 vorgeschaltet, zwischen einem an der Zuleitung Z vorgesehenen Dreiwegehahn D und der Ladezonen-Seite des Reaktors 3 angeordnet ist. Durch dieses U-Rohr muss nicht permanent die Gasflasche geöffnet sein, sodass das Transportmittel besonders wirtschaftlich eingesetzt werden kann. Der Reaktor 3 ist mittels geeignetem Schliff an dessen Abscheidezonenseitigem Ende mit der Rückleitung R mit Durchmesser 50mm verbunden, die wiederum mit ihrem anderen Ende mit der Zuleitung Z über den 6mm Dreiwegehahn D verbunden ist. Dies erlaubt die Rückführung des unverbrauchten oder zurückgewonnenen Transportmittels von der Abscheidezone L2 zur Ladezone L1. Insbesondere der Schliff S auf der Ladezonenseite des Reaktors 3 kann dabei zur Abtrennung des Ofenstückes und zur Bestückung ausgestaltet sein.

Weiterhin ist wie in Fig. 4 ersichtlich eine Kühlfalle 8 mit 80-100 mm Durchmesser dem Zwei-Zonen-Ofen 3 in Transportrichtung nachfolgend angeordnet und mit der Rückleitung R verbunden, wobei ein weiteres Ventil V der Kühlfalle 8 nachgeordnet angeordnet sein kann. Weiterhin ist ebenfalls aus Fig. 4 ersichtlich, dass verschiedene Pumpensysteme, wie Vakuumpumpe VP und Wasserstrahlpumpe WP zweckmäßig angeordnet und insbesondere über geeignete Dreiwegehähne D' bzw. D'' mit der Rückleitung R verbunden werden können, wodurch sämtliche Zuleitungen abgeriegelt werden können, sodass das Transportmittel im Kreis zirkulieren kann und nicht durch zuströmendes Chlor aus der Gasflasche beeinflusst wird. Dabei können Durchleitbecken DB vorgesehen sein, die flüssiges $N_2$ bzw. $KOH/H_2O_2$ oder Thiosulfat enthalten.

Wird als Transportmittel Chlor verwendet, wird in der Kühlfalle 8 das aus der Gasflasche 9a ausströmende Chlor auskondensiert. Sobald genügend Transportmittel in der Kühlfalle 8 vorgelegt wurde, werden die Dreiwegehähne D, D' und D''' so geschlossen, dass das Transportmittel in einem strömenden Kreisprozess über das Ausgangsgranulat 2 in der Ladezone L1 hinwegströmen kann. Die Bodenkörper in der Ladezone L1 und in der Abscheidezone L2 können dabei besonders vorteilhaft röntgenographisch untersucht und mittels Computersimulationsprogrammen ausgewertet und verglichen werden. Es soll in diesem Zusammenhang verstanden werden, dass hierzu insbesondere röntgenographische Vorrichtungen und entsprechende Computereinrichtungen und Programme verwendet werden könne, die üblicherweise nach dem Transport zur Analyse des Bodenkörpers eingesetzt werden, um diesen zu analysieren. Üblicherweise wird der Bodenkörper auf dessen Phasenreinheit untersucht, um herauszufinden, ob dieser phasenrein ist, oder ggf. welche Stoffe sich noch im Ausgangsbodenkörper befinden.

Die Transportraten werden durch einfaches Auswägen der innerhalb der Versuchsdauer in der Abscheidezone L2 abgeschiedenen Kristalle oder Bodenkörper als m exp in mg/h ermittelt. Hierbei ist es vorteilhaft das erfindungsgemäße Verfahren vor dem vollständigen Verbrauch des Quellenbodenkörpers in Ladezone L1 rechtzeitig abzubrechen, sodass noch mit stationärem Abscheidungsverhalten gerechnet werden kann. Sobald man die Transportrate bestimmt hat, wird für das Recycling der SE-Metalle der chemische Transport nach dem erfindungsgemäßen Verfahren bevorzugt solange betrieben, bis im Ausgangsbodenkörper L1 kein SE-Metall mehr nachweisbar ist, sodass das SE-Metall aus dem Ausgangsbodenkörper L1 im Wesentlichen, bevorzugt vollständig, recycelt ist.

Die in der vorangehenden Beschreibung, den Ansprüchen, den Beispielen und den Zeichnungen offenbarten Merkmale der Erfindung können sowohl einzeln als auch in beliebiger Kombination zur Verwirklichung der Erfindung in ihren verschiedenen Ausführungsformen wesentlich sein.

**Referenzzeichen**

| | |
|---|---|
| 1 | Apparatur |
| 2 | Substrat |
| 3 | Reaktor |
| 4 | erster Kanal |
| 5, 5' | Abscheidungsvorrichtung |
| 6, 6' | Aufnahmevorrichtung |
| 61 | Sammelrichter |
| 62 | Auffangschale |
| 63 | Regulierelement |
| 7 | Spannungsquelle |
| 8 | Kühlfalle |
| 9a, 9b | Gasflasche |
| 10 | Kunststoffschlauch |
| 11 | Mischventil |
| 12 | Blasenzähler |

| 13, 13a | $CaCl_2$-Reaktor |
|---|---|
| 13, 13b | $FeCl_3$-Reaktor |
| 13, 13c | Molekularsieb |
| 13, 13d | $P_2O_5$-Reaktor |
| D, D', D'' | Dreiwegehahn |
| S | Schliff |
| G | Gasfluss |
| L1 | Ladezone |
| L2 | Abscheidezone |
| VP | Vakuumpumpe |
| WP | Wasserstrahlpumpe |

**Patentansprüche**

1. Verfahren zur Rückgewinnung wenigstens eines SE-Metalls aus einem das wenigstens eine SE-Metall aufweisende Substrat (2), wobei das Verfahren wenigstens die folgenden Schritte umfasst:

   (a) Bereitstellen des Substrats (2) in einer beheizbaren Ladezone (L1) bei einer Temperatur $T_1$ und einem Druck $P_1$,
   (b) Bereitstellen wenigstens einer Abscheidungsvorrichtung (5) in einer beheizbaren Abscheidezone (L2) bei einer Temperatur $T_2$ und einem Druck $P_2$,
   (c) Chemisches Transportieren des SE-Metalls und/oder einer das SE-Metall enthaltenden Verbindung, in einem Temperatur- und/oder Druckgradienten von Ladezone (L1) zur Abscheidezone (L2), wobei $T_2$ größer $T_1$ ist.

2. Verfahren nach Anspruch 1, wobei Schritt (a) weiter umfasst einen Schritt des Bereitstellens eines Transportmittels, wobei das Transportmittel geeignet ist, bei der Temperatur $T_1$ und einem Druck $P_1$ mit dem SE-Metall zu einer gasförmigen Verbindung zu reagieren, und wahlweise, Bereitstellen von festem Aluminiumhalogenid des Chlors, Broms oder Jods, welches bei der Temperatur $T_1$ und dem Druck $P_1$ gasförmig ist und geeignet ist, mit der gasförmigen Verbindung zu Gasphasenkomplexen zu reagieren.

3. Verfahren nach Anspruch 1 oder 2, wobei das Verfahren, insbesondere Schritt (a) weiter umfasst einen Schritt

   (a') des Herstellens des Druckes $P_1$ in der beheizbaren Ladezone (L1) und Erhitzen des SE-metallhaltigen Substrats auf die Temperatur $T_1$ bei dem Druck $P_1$ in der beheizbaren Ladezone (L1); und/oder wobei das Verfahren, insbesondere Schritt (b) weiter umfasst einen Schritt
   (b') des Herstellens des Druckes $P_2$ in der beheizbaren Abscheidezone (L2) und Erhitzen der Abscheidungsvorrichtung (5) auf die Temperatur $T_2$ bei dem Druck $P_2$ in der beheizbaren Abscheidezone (L2).

4. Verfahren nach einem der Ansprüche 1 bis 3, wobei das Verfahren insbesondere Schritt (c) weiter umfasst einen Schritt

   (c') des Kontaktierens und Reagierens des Transportmittels, und wahlweise des festen Aluminiumhalogenids, mit dem gemäß Schritt (a) und/oder (a') behandelten Substrats (2), so dass das Transportmittel mit dem Substrat (2) zu einer gasförmigen Verbindung und/oder zu einem Gasphasenkomplex reagiert; und/oder
   (c'') Kontaktieren einer gasförmigen Verbindung oder eines Gasphasenkomplexes mit der gemäß Schritt (b) und/oder (b') vorbehandelte Abscheidungsvorrichtung, wobei die gasförmige Verbindung an der Abscheidungsvorrichtung (5) in das elementare SE-Metall oder eine intermetallische Phase enthaltend das SE-Metall oder Borid des SE-Metalls oder Nitride des SE-Metalls und das Transportmittel oder eine andere Verbindung zerfällt; und, wahlweise, einen Schritt
   (d) des Trennens des SE-Metalls von der Abscheidungsvorrichtung.

5. Eine Apparatur (1) zur Rückgewinnung wenigstens eines SE-Metalls, insbesondere des SE-Metalls als solchem oder einer SE-haltigen intermetallischen Phase, aus einem das wenigstens ein SE-Metall aufweisenden Substrat (2), insbesondere einem das wenigstens ein SE-Metall in Form des SE-Metalls als solchem oder einer SE-haltigen intermetallischen Phase aufweisenden Substrat (2), mit einem, bevorzugterweise hermetisch verschließbaren, Reaktor (3) umfassend

(a) eine auf eine Temperatur $T_1$ und einem Druck $P_1$ beheizbare Ladezone (L1) zur Aufnahme des SE-metallhaltigen Substrats (2);

(b) einen ersten Kanal (4) zur Ermöglichung eines Gasflusses (G) des Transportmittels von Ladezone (L1) zur Abscheidezone (L2);

(c) eine beheizbare Abscheidezone (L2) mit wenigstens einer beheizbaren Abscheidungsvorrichtung (5) zum Abscheiden des wenigstens einen Selten-Erd-Metalls, insbesondere als SE-Metalls als solchem oder einer SE-haltigen intermetallischen Phase, bei einer Abscheidungstemperatur $T_2$ und einem Druck $P_2$,

**dadurch gekennzeichnet, dass**

die beheizbaren Abscheidungsvorrichtung (5) mit einem metallischen Material beschichtet ist und/oder aus einem metallischen Material gebildet ist, das einen Schmelzpunkt von mindestens 2000 °C aufweist und wobei $T_2$ größer $T_1$ ist.

6. Apparatur (1) nach Anspruch 5, wobei die Apparatur (1) zur Rückgewinnung wenigstens eines weiteren SE-Metalls ist, wobei die Abscheidezone (L2) wenigstens eine weitere Abscheidungsvorrichtung (5') zum Abscheiden wenigstens eines weiteren SE-Metalls bei einer Abscheidungstemperatur $T_2'$ und einem Druck $P_2'$ umfasst und, wobei bevorzugterweise $T_2'$ größer $T_2$ ist.

7. Apparatur (1) nach einem der Ansprüche 5 oder 6, wobei die Abscheidezone (L2) wenigstens eine Aufnahmevorrichtung (6) zur Aufnahme von, bevorzugterweise geschmolzenem, SE-Metall und/oder intermetallischer Phase, umfasst, und wobei, bevorzugterweise, die Aufnahmevorrichtung (6) unterhalb der Abscheidungsvorrichtung (5) positioniert ist; und wobei, bevorzugterweise, die Aufnahmevorrichtung (6) als Vertiefung und/oder Gefäß ausgebildet ist.

8. Apparatur (1) und/oder Verfahren nach einem der Ansprüche 1 bis 7, wobei der erste Kanal (4) als Diffusionsstrecke zum chemischen Transport des wenigstens einen SE-Metalls mittels eines Transportmittels in einem Temperaturgradienten ausgebildet ist.

9. Apparatur (1) und/oder Verfahren nach einem der vorhergehenden Ansprüche, wobei das wenigstens eine SE-Metall in dem das wenigstens eine SE-Metall aufweisenden Substrat (2) in elementarer Form, als Legierung und/oder als, bevorzugterweise magnetische Eigenschaften aufweisende, intermetallische Phase vorliegt und/oder wobei das wenigstens eine SE-Metall in elementarer Form oder in der Form einer Verbindung rückgewonnen wird, wobei die Verbindung bevorzugterweise ausgewählt ist aus der Gruppe umfassend intermetallische Phasen, Borid und Nitrid.

10. Apparatur (1) und/oder Verfahren nach einem der vorhergehenden Ansprüche, wobei die Abscheidungstemperatur $T_2$ im Bereich von etwa 400°C bis etwa 1200°C ist.

11. Apparatur (1) und/oder Verfahren nach einem der vorhergehenden Ansprüche, wobei die Temperatur $T_1$ im Bereich von etwa 300 °C bis etwa 1100 °C ist.

12. Apparatur (1) und/oder Verfahren nach einem der vorhergehenden Ansprüche, wobei die Abscheidungsvorrichtung (5, 5') als, bevorzugterweise gemäß einer laminaren Strömung geformtes, Sieb, Netz, Lochplatte, Filter oder Röhrensystem ausgebildet ist, wobei bevorzugterweise eine Loch oder Maschenweite im Bereich von etwa 0,1 mm bis etwa 2 mm gewählt ist.

13. Apparatur (1) und/oder Verfahren nach einem der vorhergehenden Ansprüche, wobei die Abscheidungsvorrichtung (5, 5') aus einem metallischen Material beschichtet und/oder aus einem metallischen Material gebildet ist, das ausgewählt ist aus der Gruppe umfassend Wolfram und Wolfram-Legierungen.

14. Apparatur (1) und/oder Verfahren nach einem der vorhergehenden Ansprüche, wobei das Selten-Erd-Metall ausgewählt ist aus der Gruppe der Seltenen Erdmetalle umfassend Neodym (Nd), Samarium (Sm), Dysprosium (Dy) und Praseodym (Pr).

15. Apparatur (1) und/oder Verfahren nach einem der vorhergehenden Ansprüche, wobei das Transportmittel bei $T_1$ und $P_1$ gasförmig ist und mit dem SE-Metall zu einer gasförmigen Verbindung, einem Halogenid oder Oxidhalogenid des Chlors, Broms oder Jods reagierbar ist und/oder wobei das Transportmittel ausgewählt ist aus der Gruppe der Halogene, Hydrogenhalogenide, Ammoniumhalogeniden und Mischungen derselben, wobei die Halogene/Halogenide Chlor, Brom und Jod umfassen.

**Fig. 1A**

T [°C]

1000°C

W-Sieb/Netz

W-Zuleitung

Transport
mittel

800°C

Muffe        Ausgangsbodenkörper

Senke          Quelle

**Fig. 1B**

T [°C]

1000°C

Verlauf des Temperaturgradienten

5

3,4

W-Zuleitung

Transport
mittel

800°C

Muffe        2

Senke L2          Quelle L1

**Fig. 1C**

T [°C]

1000°C

Verlauf des Temperaturgradienten

5

3,4

W-Zuleitung

Transport
mittel

800°C

6, 61   6, 63

6, 62

Muffe

2

Senke L2          Quelle L1

Fig. 2a

Fig. 2b

Fig. 3a

Fig. 3b

Fig. 4

Fig. 5

Fig. 6

Fig. 7

EUROPÄISCHER RECHERCHENBERICHT

**Nummer der Anmeldung**

EP 15 15 5297

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | HAYAKAWA H ET AL: "Chemical transport reactions of some rare earth phosphides: syntheses of new rare earth-silicon-phosphorus ternary compounds", JOURNAL OF THE LESS-COMMON METALS, ELSEVIER-SEQUOIA S.A. LAUSANNE, CH, Bd. 41, Nr. 2, 1. Juli 1975 (1975-07-01), Seiten 197-210, XP024068606, ISSN: 0022-5088, DOI: 10.1016/0022-5088(75)90028-4 [gefunden am 1975-07-01] * Seite 199; Abbildung 1 * ----- | 1-4 | INV. C22B7/00 C22B59/00 |
| X | US 3 615 168 A (WEHMEIER FRIEDEL H P) 26. Oktober 1971 (1971-10-26) * das ganze Dokument * ----- | 1-4 | |
| X,D | CN 101 550 494 A (BEIJING NONFERROUS METAL [CN] BEIJING NONFERROUS METAL; GRIREM ADVANCE) 7. Oktober 2009 (2009-10-07) * das ganze Dokument * ----- | 5,6 | RECHERCHIERTE SACHGEBIETE (IPC) C22B |
| X | US 3 147 141 A (HIROSHI ISHIZUKA) 1. September 1964 (1964-09-01) * das ganze Dokument * ----- | 5-7 | |
| | -/-- | | |

Der vorliegende Recherchenbericht wurde für alle Patentansprüche erstellt

| Recherchenort | Abschlußdatum der Recherche | Prüfer |
|---|---|---|
| München | 3. Juli 2015 | Juhart, Matjaz |

EPO FORM 1503 03.82 (P04C03)

**EP 2 907 882 A1**

Europäisches
Patentamt

European
Patent Office

Office européen
des brevets

**EUROPÄISCHER RECHERCHENBERICHT**

Nummer der Anmeldung

EP 15 15 5297

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | SUN Y H ET AL: "Comparative study for mutual separation characteristics of binary mixed oxides Y2O3-Ln2O3 (Ln=Dy, Ho and Er) and Ho2O3-Er2O3 using stepwise chlorination-chemical vapor transport reaction mediated by vapor complexes KLnCl4", JOURNAL OF ALLOYS AND COMPOUNDS, ELSEVIER SEQUOIA, LAUSANNE, CH, Bd. 390, Nr. 1-2, 22. März 2005 (2005-03-22), Seiten 182-188, XP027812530, ISSN: 0925-8388 [gefunden am 2005-03-22] * das ganze Dokument * ----- | 1-7 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| München | 3. Juli 2015 | Juhart, Matjaz |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 15 15 5297

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-07-2015

| Im Recherchenbericht angeführtes Patentdokument | Datum der Veröffentlichung | Mitglied(er) der Patentfamilie | Datum der Veröffentlichung |
|---|---|---|---|
| US 3615168       A | 26-10-1971 | BE    754563 A1<br>DE   2039888 A1<br>FR   2058222 A1<br>GB   1305737 A<br>NL   7011647 A<br>SE    354422 B<br>US   3615168 A | 01-01-1971<br>04-03-1971<br>28-05-1971<br>07-02-1973<br>16-02-1971<br>12-03-1973<br>26-10-1971 |
| CN 101550494     A | 07-10-2009 | KEINE | |
| US 3147141       A | 01-09-1964 | DE   1176103 B<br>GB    950444 A<br>NL    251143 A<br>US   3147141 A | 20-08-1964<br>26-02-1964<br>03-07-2015<br>01-09-1964 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 102952948 A
- CN 101550494 A

**In der Beschreibung aufgeführte Nicht-Patentliteratur**

- **GUNSILIUS H. ; URLAND W. ; KREMER R. Z.** *Anorg., Allg. Chem.,* 1987, vol. 550, 35
- **YIN L. ; LINSHAN W. ; YUHONG W.** *Rare Met.,* 2000, vol. 19, 157
- **SCHULZE M. ; URLAND W.** *Eur. J. Solid State Inorg. Chem.,* 1991, vol. 28, 571
- **H. OPPERMANN ; M. ZHANG ; C. HENNIG.** *Z. Naturforsch.,* 1998, vol. 53 b, 1343-1351
- **MURASE, KUNIACKI et al.** *Journal of Alloy and Compounds,* 1995, vol. 217, 218-225